# EUROPEAN PATENT SPECIFICATION

(11) **EP 4 173 276 B1**
(45) Date of publication and mention of the grant of the patent: **22.10.2025**
(21) Application number: 21748997.0
(22) Date of filing: 29.06.2021
(51) Int. Cl.: H04M 3/56, G06Q 30/02, G10L 25/00

(54) **POLLING QUESTIONS FOR A CONFERENCE CALL DISCUSSION**
ABFRAGE FÜR EINE KONFERENZVERBINDUNGSDISKUSSION
QUESTIONS DE SCRUTATION DE DISCUSSION D'APPEL DE CONFÉRENCE

(30) Priority: 30.06.2020 US 202063046240 P; 25.08.2020 US 202063070220 P; 24.03.2021 US 202117211711; 24.03.2021 US 202117211715
(43) Date of publication of application: 03.05.2023
(60) Divisional application: 23208880.7
(73) Proprietor: Google LLC, Mountain View, CA 94043 (US)
(72) Inventor: BURD, Emily, Mountain View, California 94043 (US); SHARMA, Akshat, Mountain View, California 94043 (US)
(74) Representative: Betten & Resch
(86) International application number: PCT/US2021/039668
(87) International publication number: WO 2022/006144

(56) References cited:
- US-A1- 2002 085 030
- US-A1- 2018 232 752
- US-A1- 2018 359 530

## Description

### TECHNICAL FIELD

Aspects and implementations of the present disclosure relate to polling questions for a conference call discussion.

### BACKGROUND

Video or audio-based conference call discussions can take place between multiple participants via a conference platform. A conference platform includes tools that allow multiple client devices to be connected over a network and share each other's audio data (e.g., voice of a user recorded via a microphone of a client device) and/or video data (e.g., a video captured by a camera of a client device, or video captured from a screen image of the client device) for efficient communication. A conference platform can also include tools to allow a participant of a conference call to pose a question to other participants (e.g., via a conference platform user interface (UI)) during the conference call discussion to solicit responses (referred to as polling). The conference platform can collect responses provided by the other participants and generate polling results.

Document US 2018/232752 A1 refers to systems and methods for managing a digital survey over voice-capable devices. In particular, the systems and methods described herein create a digital survey question from a verbal input. Additionally, the systems and methods described herein provide the digital survey question to respondents by way of voice-capable devices. The systems and methods also receive verbal survey responses, generate survey results from the verbal responses, and provide the survey results to a survey administrator.

Document US 2002/085030 A1 refers to an online interactive system for facilitating collaboration between a presenter and a plurality of participants comprising a presenter graphical user interface having a comment text box, a question text box, an answer text box, a whisper text box, and an audience text box. Using the interface, the presenter is able to authorize a selected participant to pose a question, post comments in the comments text box, post answers for display in the answer text box, select a participant from the audience text box for private communication displayed in the whisper text box, and enter text to be transmitted to the plurality of participants and to be displayed on the participant graphical user interface.

### SUMMARY

The present invention is set out in the appendex claims.

The below summary is a simplified summary of the disclosure in order to provide a basic understanding of some aspects of the disclosure. This summary is not an extensive overview of the disclosure. It is intended neither to identify key or critical elements of the disclosure, nor delineate any scope of the particular implementations of the disclosure or any scope of the claims. Its sole purpose is to present some concepts of the disclosure in a simplified form as a prelude to the more detailed description that is presented later.

In some implementations, a system and method are disclosed for designating a verbal phrase presented during a conference call as a polling question. In an implementation, one or more text strings including a textual form of one or more verbal phrases provided by one or more participants of a conference call are identified. The one or more text strings are provided as input to a trained machine learning model. One or more outputs from the trained machine learning model are obtained. A level of confidence that a verbal phrase of the one or more verbal phrase provided by the one or more participants includes a question associated with polling during the conference call is extracted from the one or more outputs. In response to a determination that the level of confidence satisfies a confidence criterion, the verbal phrase is designated as a polling question presented during the conference call.

In some implementations, a system and method are disclosed for training a machine learning model to determine whether a verbal phrase provided by a participant of a conference call includes a polling question. In an implementation, training data for the machine learning model is generated. Generating the training data includes generating a training input including data corresponding to a phrase provided by a user of a platform. Generating the training data also includes generating a target output for the training input, where the target output includes an indication of whether the phrase corresponds to a question previously used for polling one or more additional users of the platform. The training data is provided to train the machine learning model on (i) a set of training inputs including the training input and (ii) a set of target outputs including the target output.

In some implementations, a method and system are disclosed for populating answers to polling questions based on initial responses. In an implementation, the method includes providing a graphical user interface (GUI) to a set of participants of a conference call. The GUI includes a first portion that presents a polling question to be answered by the set of participants. The method further includes, responsive to detecting that a first participant of the set of participants has provided a verbal answer to the polling question, modifying the GUI provided to a second participant of the set of participants to present, in a second portion, a textual form of the verbal answer provided by the first participant. The second portion also includes a GUI element that allows the second participant to provide a non-verbal answer to the polling question via selection of the GUI element associated with the verbal answer provided by the first participant.

### BRIEF DESCRIPTION OF THE DRAWINGS

Aspects and implementations of the present disclosure will be understood more fully from the detailed description given below and from the accompanying drawings of various aspects and implementations of the disclosure, which, however, should not be taken to limit the disclosure to the specific aspects or implementations, but are for explanation and understanding only.
**FIG. 1** illustrates an example system architecture, in accordance with implementations of the present disclosure.
**FIG. 2** is a block diagram illustrating a conference platform and one example polling engine for the conference platform, in accordance with implementations of the present disclosure.
**FIG. 3A** illustrates recognizing a verbal phrase provided during a conference call as a polling question, in accordance with implementations of the present disclosure.
**FIGs. 3B-3D** illustrate using a verbal phrase recognized as a polling question to poll participants of a conference call, in accordance with implementations of the present disclosure.
**FIGs. 4A-B** illustrate recognizing a verbal phrase included in a conference call transcript as a polling question, in accordance with implementations of the disclosure.
**FIG. 5** is a block diagram illustrating a conference platform and another example polling engine for the conference platform, in accordance with implementations of the present disclosure.
**FIG. 6A** illustrates an example user interface for a video conference call between multiple participants via a conference platform, in accordance with implementations of the present disclosure.
**FIG. 6B** illustrates a sample UI for a participant responding to a polling question during the conference call, in accordance with implementations of the present disclosure.
**FIGs. 6C-6D** illustrate sample UIs populating, for additional participants of the conference call, answers to the polling question based on the verbal answer previously provided by another participant, in accordance with implementations of the present disclosure.
**FIG. 7** depicts a flow diagram of a method for designating a verbal phrase provided during a conference call as a polling question, in accordance with implementations of the present disclosure.
**FIG. 8** depicts a flow diagram of a method for training a machine learning model to identify a verbal phrase provided during a conference call that corresponds with a polling question, in accordance with implementations of the present disclosure.
**FIGs. 9** depicts a flow diagram of a method for populating answers to polling questions based on initial responses, in accordance with implementations of the present disclosure.
**FIG. 10** is a block diagram illustrating an exemplary computer system, in accordance with implementations of the present disclosure.

### DETAILED DESCRIPTION

Aspects of the present disclosure relate to polling questions for a conference call. In particular, aspects of the present disclosure relate to recognizing polling questions from a conference call discussion. Additional or alternative aspects of the present disclosure relate to populating answers to polling questions based on initial responses provided by participants of a conference call. A conference platform can enable video or audio-based conference call discussions between multiple participants via respective client devices that are connected over a network and share each other's audio data (e.g., voice of a user recorded via a microphone of a client device) and/or video data (e.g., a video captured by a camera of a client device) during a conference call. In some instances, a conference platform can enable a significant number of client devices (e.g., up to one hundred or more client devices) to be connected via the conference call.

A participant of a conference call may want to pose a question to the other participants of the conference call to solicit responses from the other participants (referred to as polling). The participant can provide a polling question during the conference call and the conference platform can collect responses provided by other participants of the conference call. Some existing conference platforms can provide a user interface (UI) to each client device connected to the conference call, where the UI displays the video data and/or audio data shared over the network, and can also display messages exchanged between participants during the conference call. The participant that wants to pose a polling question can pose the polling question to the other participants by causing the client devices associated with the other participants to display a message based on the polling question. For example, the participant can select a polling option in the UI of the conference platform and type the polling question in a designated area of the conference platform UI at a client device. In response to receiving the polling question, the conference platform can generate a message based on the polling question and cause the message to be displayed via the conference platform UI at the client devices associated with the other participants.

In some systems, a conference call participant that wants to pose a polling question to the other participants can think of the polling question prior to the conference call and pose the polling question via the conference platform UI at a particular instance of the discussion. However, an introduction of a pre-determined polling question during a conference call can interrupt an organization or a natural flow of the conference call discussion and can increase the length of the discussion. In some instances, a conference call participant can think of the polling question based on the discussion between participants of the conference call. To poll the other participants using the polling question, the participant can ask the other participants to pause the discussion, provide the polling question via the conference platform UI at the client device, and cause the polling question to be displayed to the other participants, as previously described. However, the process to provide the polling question via the conference platform UI and cause the polling question to be displayed to the other participants can take a significant amount of time (e.g., minutes). If multiple polling questions are posed to participants of the conference call, the length of the conference call discussion can increase significantly. Further, an organization and/or a natural flow of the conference call discussion is interrupted and participants are unable to efficiently discuss each topics for the conference call. By increasing the length of the conference call discussion, additional system resources are utilized to facilitate the connection between the client devices associated with each participant. Therefore, fewer system resources are available to other processes, both on the client devices and computing devices hosting the conference platform, reducing an overall efficiency and increasing an overall latency for the client devices and the computing devices.

Some implementations of the present disclosure address the above and other deficiencies by providing a machine learning model that recognizes polling questions from a conference call discussion. The machine learning model can be trained based on phrases previously used to poll users of a platform (e.g., a conference platform, a collaboration platform, etc.). During a conference call, a conference platform can generate audio data associated with verbal phrases provided by participants of the conference call. In some embodiments, the conference platform can generate one or more text strings including the provided verbal phrases and provide the text strings as input to a trained machine learning model. In other or similar embodiments, the audio data itself (i.e., the audio recording) can be used as input to the trained machine learning model. The machine learning model can be trained to determine whether the text strings include a verbal phrase representing a question for polling participants of the conference call. In response to receiving the text strings as input, the machine learning model can provide, as an output, a level of confidence indicating a likelihood that the text strings include a verbal phrase representing a polling question. The conference platform can determine whether to designate the verbal phrase of the text strings as a polling question (e.g., based on a confidence criterion). In response to determining to designate the verbal phrase as a question for polling, the conference platform can display a message inquiring whether the participant would like to pose the question to the other participants of the conference call. The message can be displayed via a UI of a client device associated with the participant that provided the verbal phrase. In response to receiving an indication that the participant would like to pose the question to the other participants of the conference call (e.g., if the participant selects a designated checkbox), the conference platform can update the conference platform UI on client devices associated with other participants of the conference call to include a message associated with the polling question.

The machine learning model can also be used to identify polling questions and provided responses after a conference call is completed. For example, the conference platform can generate a transcript of a conference call after the conference call is completed. The conference platform can identify one or more text strings, based on the generated transcript, including verbal phrases provided by conference call participants and provide the text strings as input to the machine learning model. The machine learning model can provide, as an output, a level of confidence indicating a likelihood that text strings includes verbal phrase representing a question for polling. In response to designating a verbal phrase as a question for polling, the conference platform can identify, based on the generated transcript, one or more strings of text including verbal phrases that represent responses to the polling question. The conference platform can generate polling results based on the identified polling question and the identified responses and provide the generated polling results to a participant of the conference call (e.g., an organizer of the conference call).

Some aspects of the present disclosure recognize polling questions based on verbal phrases provided during a conference call discussion. During a conference call, the conference platform can recognize polling questions provided by participants and can automatically display a message inquiring whether the participant that provided a verbal phrase would like to pose the polling question to the other participants. As such, a participant that wants to pose a polling question to the other participants does not interrupt the organization or the natural flow of the conference call by asking the other participants to pause the discussion while the participant provides the polling question via the conference platform UI. Further, as described above, verbal phrases including polling questions and responses can be identified from a transcript generated after the conference call. As such, the conference platform can recognize polling questions and responses provided during the conference call without a participant interrupting the discussion to pose the polling question and solicit responses. Thus, the participants of the conference call can efficiently conduct the conference call discussion with a reduced number of interruptions, thereby reducing the length of the conference call discussion. As a result of reducing the length of a conference call discussion, the amount of system resources utilized to facilitate the connection between client devices associated with each participant is decreased. Therefore, more system resources are available at the client devices and other computing devices for other processes, resulting in an increase of overall efficiency and a decrease in overall latency.

In some additional or alternative systems, each conference call participant that wants to provide an answer to a polling question can think of the answer and provide the answer via the conference platform UI when the polling question is presented. However, a conference call can include a significant number of participants (e.g., tens, hundreds, thousands of participants). Each participant can take a significant amount of time (e.g., minutes) to think of an answer and provide the answer via the conference platform UI. In some instances, this can interrupt an organization or a natural flow of the conference call discussion and can cause the length of the conference call discussion to increase. If multiple polling questions are posed to participants of the conference call, the length of the conference call discussion can increase significantly. Further, an organization and/or a natural flow of the conference call discussion can be interrupted and participants may be unable to efficiently discuss each topic for the conference call. By increasing the length of the conference call discussion, additional system resources can be utilized to facilitate the connection between the client devices associated with each participant. Therefore, fewer system resources may be available to other processes, both on the client devices and computing devices hosting the conference platform, reducing an overall efficiency and increasing an overall latency for the client devices and the computing devices.

Some additional or alternative implementations of the present disclosure address the above and other deficiencies by providing systems and methods for populating answers to polling questions based on initial responses from participants of a conference call. A conference call platform can provide a conference UI to a client device associated with each participant of a conference call. A participant of a conference call can provide a polling question to be presented to other participants of the call via the conference UI. The conference call platform can present the polling question to each of the other participants of the call via the conference UI and can also present one or more UI elements to allow each participant to provide a verbal answer to the polling question. In some embodiments, a first participant can provide a verbal answer to the polling question before other participants provide an answer. In response to detecting the first participant has provided a verbal answer, the conference platform can modify the UI for one or more other participants to present a textual form of the verbal answer provided by the first participant. The conference platform can also modify the UI to include a UI element that allows the other participants to provide an answer to the polling question that corresponds to the verbal answer provided by the first participant.

In one illustrative example, a first user can provide a verbal answer of "Wednesday" to a particular polling question. The conference platform can modify the UI of a second participant to include the textual form of the verbal answer "Wednesday" along with a UI element that enables the second participant to provide a non-verbal answer that corresponds with the answer "Wednesday." The second participant can engage with the UI element to provide the non-verbal answer or can engage with another UI element to provide (verbally or non-verbally) a different answer from the answer "Wednesday" (e.g., "Friday"). In a further example, the conference platform can modify the UI of a third participant to include the textual form of the verbal answer "Wednesday" and the answer "Friday," along with one or more UI elements that enable the third participant to provide an answer corresponding to the presented answers.

Some aspects of the present disclosure automatically populate answers to polling questions to participants of a conference call based on initial responses provided by other participants of the call. During a conference call, a UI presented to a participant of the call can be updated to include the polling question and a UI element that allows the participant to provide a verbal response to the question. By allowing the participant to provide a verbal response to the question, the participant is able to more quickly provide an answer to the polling question than if he or she is providing a non-verbal answer to the question (e.g., by the participant typing the response in a text box UI element). Further, the conference platform can suggest answers to (populate answers for) a participant based on answers previously provided by other participants before the participant provides his or her answer. The participant can interact with a UI element to provide a non-verbal answer that corresponds with a previously provided answer or can provide a verbal answer, as previously described. By allowing the participant to provide a non-verbal answer based on previously provided answers, the participant can think of an answer to the polling question and can provide the answer more quickly than if the participant thinks of and/or types his or her own answer. As such, the participants of the conference call can efficiently conduct the conference call discussion with a reduced number of interruptions, thereby reducing the length of the conference call discussion. As a result of reducing the length of a conference call discussion, the amount of system resources utilized to facilitate the connection between client devices associated with each participant is decreased. Therefore, more system resources are available at the client devices and other computing devices for other processes, resulting in an increase of overall efficiency and a decrease in overall latency.

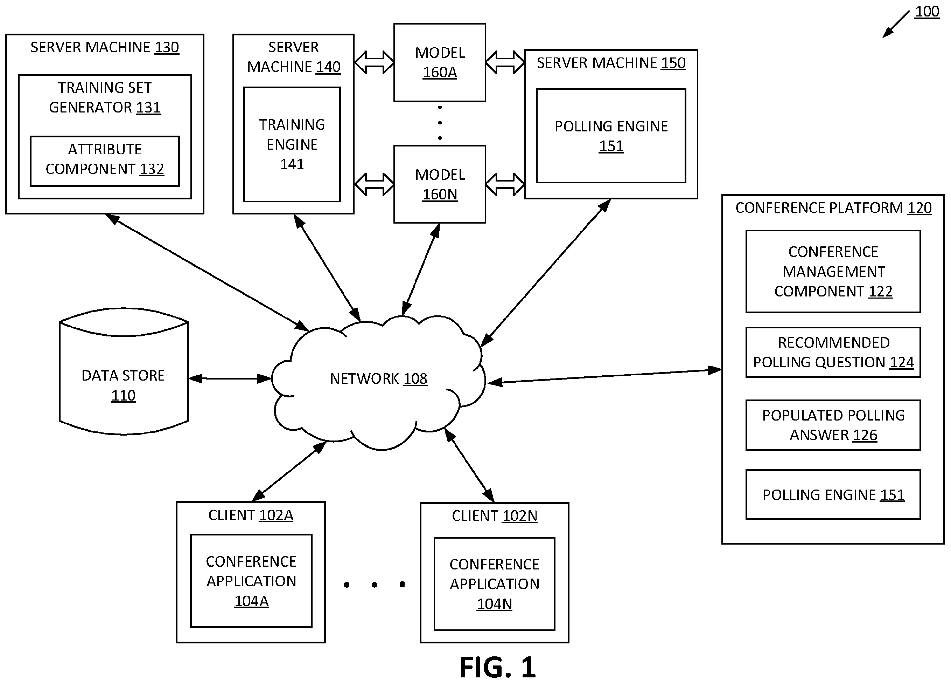

**FIG.** 1 illustrates an example system architecture 100, in accordance with implementations of the present disclosure. The system architecture 100 (also referred to as "system" herein) includes client devices 102A-N, a data store 110 and a conference platform 120, and one or more server machines 130-150, each connected to a network 108.

In implementations, network 108 may include a public network (e.g., the Internet), a private network (e.g., a local area network (LAN) or wide area network (WAN)), a wired network (e.g., Ethernet network), a wireless network (e.g., an 802.11 network or a Wi-Fi network), a cellular network (e.g., a Long Term Evolution (LTE) network), routers, hubs, switches, server computers, and/or a combination thereof.

In some implementations, data store 110 is a persistent storage that is capable of storing data as well as data structures to tag, organize, and index the data. A data item can include audio data and/or video data, in accordance with embodiments described herein. Data store 110 can be hosted by one or more storage devices, such as main memory, magnetic or optical storage based disks, tapes or hard drives, NAS, SAN, and so forth. In some implementations, data store 110 can be a network-attached file server, while in other embodiments data store 110 can be some other type of persistent storage such as an object-oriented database, a relational database, and so forth, that may be hosted by conference platform 120 or one or more different machines (e.g., server machines 130-150) coupled to the conference platform 120 via network 108.

Conference platform 120 can enable users of client devices 102A-N to connect with each other via a conference call, such as a video conference call or an audio conference call. A conference call refers to an audio-based call and/or a video-based call in which participants of the call can connect with one or more additional participants. Conference platform 120 can allow a user to join and participate in a video conference call and/or an audio conference call with other users of the platform. Although embodiments of the present disclosure refer to multiple participants (e.g., 3 or more) connecting via a conference call, it should be noted that embodiments of the present disclosure can be implemented with any number of participants connecting via the conference call (e.g., 2 or more).

The client devices 102A-N may each include computing devices such as personal computers (PCs), laptops, mobile phones, smart phones, tablet computers, netbook computers, network-connected televisions, etc. In some implementations, client devices 102A-N may also be referred to as "user devices." Each client device 102A-N can include a web browser and/or a client application (e.g., a mobile application or a desktop application), such as conference application 104A-N. In some implementations, the web browser and/or conference application 104 can display a graphical user interface (GUI), provided by conference platform 120, for users to access conference platform 120. For example, a user can join and participate in a video conference call or an audio conference call via a GUI provided by conference platform 120 and presented by the web browser or conference application 104, or another client application.

Each client device 102A-N can include an audiovisual component that can generate audio and video data to be streamed to conference platform 120. In some implementations, the audiovisual component can include a device (e.g., a microphone) to capture an audio signal representing speech of a user and generate audio data (e.g., an audio file) based on the captured audio signal. The audiovisual component can include another device (e.g., a speaker) to output audio data to a user associated with a particular client device 102A-N. In some implementations, the audiovisual component can also include an image capture device (e.g., a camera) to capture images and generate video data of the captured data of the captured images.

In some implementations, conference platform 120 can include a conference management component 122. Conference management component 122 is configured to manage a conference call between multiple users of conference platform 120. In some implementations, conference management component 122 can provide the GUI to each client device to enable users to watch and listen to each other during a conference call. Conference management component 122 can also collect and provide data associated with the conference call to each participant of the call. For example, conference management component 122 can detect a particular user that is talking during the conference call and provide a notification to each client device associated with the conference call including an identifier of the particular user. In some instances, the conference management component 122 and/or components of each respective client device 102A-N can modify the UI based on the notification.

As described previously, an audiovisual component of each client device 102A-N can capture audio signals representing speech of a user and generate audio data based on the captured audio signal. For example, a participant to a conference call can provide a verbal phrase. The audiovisual component of the client device associated with the participant can capture audio signals recognizing the verbal phrase provided by the participant and generate audio data (e.g., an audio file) based on the captured audio signal. In some implementations, the client device 102A-N can transmit the generated audio data to conference management component 122. Conference management component 122 can generate, based on the received audio data, one or more text strings including verbal phrases provided by the participant, in some embodiments. For example, conference management component 122 can convert an audio file received from a client device 102A-N into a file including the one or more text strings. Conference management component 122 can store the one or more text strings, or the file including the one or more text strings, at data store 110. In additional or alternative embodiments, conference management component 122 can store the audio data (e.g., the received audio file) at data store 110.

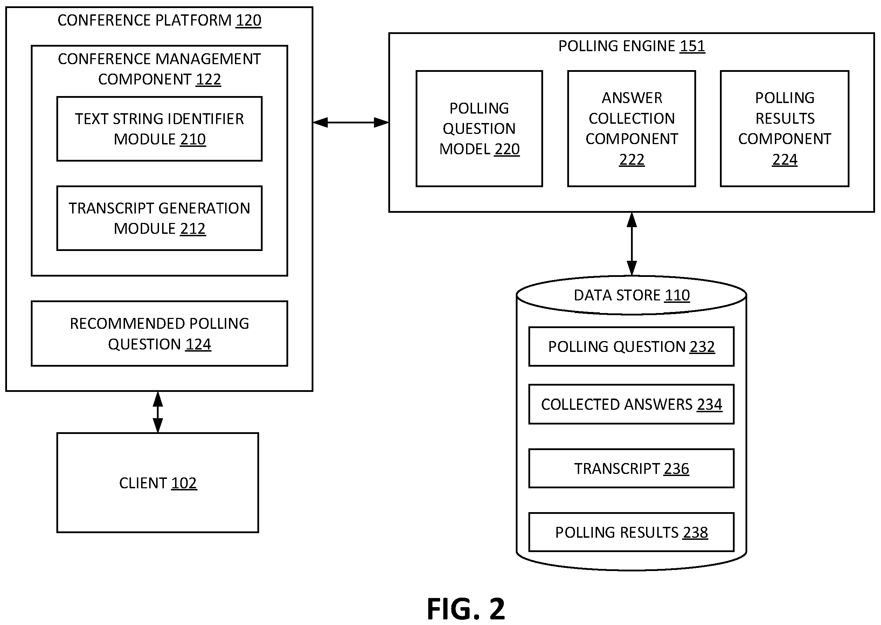

In some embodiments, conference management component 122 can receive audio data at multiple instances during the conference call. For example, each instance that a participant provides a verbal phrase, the audiovisual component of the client device associated with the participant can generate audio data based on the verbal phrase and transmit the audio data to conference management component 122. In accordance with previously described embodiments, conference management component 122 can generate separate text strings that include each verbal phrase provided by a participant of the conference call as each verbal phrase is recorded at a respective client device. During or after completion of the conference call (e.g., after each participant of the call has ended a connection between a client device and the conference platform), conference management component can generate a transcript of the conference call based on each separate generated text string and store the generated transcript at data store 110. In other or similar embodiments, conference management component 122 can receive audio data generated for each participant (e.g., from each client device 102A-N) after completion of the conference call. In such embodiments, conference management component 122 can generate text strings that include verbal phrases provided by each participant of the conference call after completion of the conference call. Each text string generated after completion of the conference call can be included in a conference call transcript stored at data store 110. In some embodiments, a conference call transcript can be generated by transcript generation module 212 of conference management component 122, as described with respect to **FIG. 2****.**

Conference management component 122 can enable participants of the conference call to poll other participants during the conference call. A participant can poll other participants of a conference call by posing a question to the other participants to solicit responses to the question. In some implementations, a participant can pose a question to other participants by providing the question via a GUI element of the GUI provided by the conference management component 122. For example, the GUI provided by conference management component 122 can include a text box to enable a participant to type a question for polling and a GUI element (e.g., a button) configured to enable the participant to submit the question to conference platform 120. Additionally or alternatively, the participant can verbally provide the question for polling other participants, in accordance with embodiments described herein.

A recommendation system can be configured to identify verbal phrases provided by a participant of a conference call and recommend, based on the identified verbal phrase, polling questions 124 to be posed to other participants. A recommended polling question 124 can be an indicator (e.g., interface component, electronic message, recommendation feed, etc.) that provides a user with suggestions of polling questions that could be posed to other participants of the call. For example, during a conference call, a participant can provide the verbal phrase "Does everyone agree we should move the meeting to Tuesday?" The recommendation system can determine whether the provided verbal phrase includes a question for polling the other participants of the call. The recommendation system can include at least a training set generator 131, a training engine 141, a machine learning model 160, and a polling engine 151. In some implementations, a recommended polling question 124 can be based on an output of a trained machine learning model, such as machine learning models 160A-N.

Server machine 130 can include a training set generator 131 that is capable of generating training data (e.g., a set of training inputs and a set of target outputs) to train ML models 160A-N. Training data can be generated based on phrases that have been previously provided by users of a platform for polling other users of the platform, such as conference platform 120 or other platforms included in system 100 (e.g., a collaboration platform). A collaboration platform (not shown) can provide tools to enable users to collaborate with each other via messaging, documents, etc. For example, the collaboration platform can include a survey component to enable a user to prepare surveys for polling other users of the collaboration platform. A user can provide (e.g., using a UI provided by the survey component) one or more questions to be included in the survey. In response to receiving the one or more questions, the collaboration platform can cause a phrase including each provided question to be stored at data store 110. In some embodiments, the collaboration platform can also store, for each phrase, and indication that the phrase includes a question used for polling.

As described above, data store 110 can include phrases including questions that were previously provided for polling users of a platform (e.g., conference platform 120, a collaboration platform, etc.). For example, data store 110 can include questions previously provided by users of a collaboration platform for a survey, as previously described. Data store 110 can also store an indication that the phrase includes a question that was used for polling (e.g., the question was included in a survey created by a user). In some embodiments, data store 110 can also store an indication of one or more answers that were provided by users of a platform in response to the question (e.g., "yes," "no," etc.).

Training set generator 131 can generate a set of training data by identifying data corresponding to previously provided questions stored at data store 110. The set of training data can include a subset of training inputs and target output based on the identified data. The subset of training inputs can include a phrase previously provided by users of a platform (e.g., conference platform 120, a collaboration platform, etc.). In some embodiments, the phrase can be included in a text string, as previously described. In other or similar embodiments, the phrase can be included as audio data generated by a client device 102 (e.g., an audio recording of a statement provided by a user of a platform. In some embodiments, the subset of training inputs can also include one or more attributes associated with the previously provided phrase. Training set generator 131 can include an attribute component 132 configured to obtain one or more attributes associated with each phrase at data store 110. In some embodiments, an attribute can include an indication of whether the phrase includes a question. In similar embodiments, an attribute can include a question type associated with the previously provided question. A question type can correspond with one or more answers provided in response to the question. For example, training set generator 131 can determine that a question corresponds to a "yes/no"-type question in response to determining one or more answers provided in response to the question correspond to a "yes" answer or a "no" answer. Training set generator 131 can determine that one or more answers correspond to a "yes " answer or a "no" answer by determining a context associated with each answer provided in response to the previously provided question. For example, an answer to a previously provided question can be "sure," or "okay." Training set generator 131 can determine that the previously provided question corresponds to a "yes" answer or a "no" answer by determining that a context of the answers to the question correspond with a "yes" answer. In another example training generator 131 can determine that a question corresponds to a "day of the week"-type question in response to determining one or more answers provided in response to the question correspond to a day of the week.

As described above, the set of training inputs can include an audio recording of a statement provided by a user of a platform. In such embodiments, attribute component 132 can identify one or more attributes associated for an audio recording. For example, attribute component 132 can identify, in the audio recording, a portion of the audio recording at which an inflection of a user's corresponds to a question (e.g., the user's inflection is elevated to a higher pitch). An attribute associated with the audio recording can include a timestamp associated with the identified portion of the audio recording. Attribute component 132 can also identify the attributes associated with the audio recording.

Each of the subset of target outputs of the set of training data can include data pertaining to whether a phrase includes a question that was previously used for polling. Training set generator 131 can determine whether the phrase includes a question previously used for polling based on an indication for each question stored at data store 110, in accordance with previously described embodiments.

Server machine 140 may include a training engine 141. Training engine 141 can train a machine learning model 160A-N using the training data from training set generator 131. The machine learning model 160A-N can refer to the model artifact that is created by the training engine 141 using the training data that includes training inputs and corresponding target outputs (correct answers for respective training inputs). The training engine 141 can find patterns in the training data that map the training input to the target output (the answer to be predicted), and provide the machine learning model 160A-N that captures these patterns. The machine learning model 160A-N can be composed of, e.g., a single level of linear or non-linear operations (e.g., a support vector machine (SVM or may be a deep network, i.e., a machine learning model that is composed of multiple levels of non-linear operations). An example of a deep network is a neural network with one or more hidden layers, and such a machine learning model can be trained by, for example, adjusting weights of a neural network in accordance with a backpropagation learning algorithm or the like. For convenience, the remainder of this disclosure will refer to the implementation as a neural network, even though some implementations might employ an SVM or other type of learning machine instead of, or in addition to, a neural network. In one aspect, the training set is obtained by training set generator 131 hosted by server machine 130. In some embodiments, the machine learning model 160 can be a polling question model, described with respect to **FIG. 2****.**

Server 150 includes a polling engine 151 that is configured to facilitate polling of a conference call participants. In some embodiments, polling engine 151 can be configured to provide verbal phrases provided by participants of a conference call as input to a trained machine learning model 160A-N to obtain one or more outputs. In some embodiments, the verbal phrase can be included in a text string, as previously described. In other or similar embodiments, the verbal phrase can be included in an audio recording. The model can be used to determine whether a verbal phrase provided by a participant of a conference call includes a question associated with polling. The model can provide one or more outputs indicating a likelihood (e.g., a level of confidence) that a verbal phrase provided by a user is associated with a polling question. Polling engine 151 can determine whether to recommend the verbal phrase as a polling question by determining whether a level of confidence associated with the verbal phrase satisfies a confidence criterion. In some embodiments, polling engine 151 can determine the level of confidence associated with the verbal phrase satisfies a confidence criterion by determining the level of confidence satisfies or meets a threshold level of confidence. In response to determining the confidence criterion is satisfied, polling engine 151 can designate the verbal phrase as a polling question presented during the conference call and provide the polling question as a recommended polling question 124 to conference platform 120. In some embodiments, the model can also provide one or more outputs indicating potential answers associated with the verbal phrase provided as input to the model. In response to determining the confidence criterion is satisfied, polling engine 151 can provide the potential answers to the recommended polling question 124 to conference platform 120.

As described above, the GUI provided by conference management component 122 can include a GUI element (e.g., a button) to enable the participant to verbally provide the question for polling, in some embodiments. In response to detecting the participant has interacted with the GUI element, a client device 102A-N associated with the participant can initiate a recording function causing the audiovisual component of the client device 102A-N to generate audio data (e.g., an audio file) for a verbal phrase provided by the participant. In some embodiments, the client device 102A-N terminates the recording function in response to detecting a subsequent interaction with the GUI element (e.g., the participant has subsequently interacted with the GUI element, the participant has stopped interacting with the GUI element, etc.). In other or similar embodiments, the client device 102A-N terminates the recording function in response to determining a particular amount of time has passed since the participant initially interacted with the GUI element. The client device 102A-N can transmit the generated audio data to conference management component 122 and conference management component 122 can, in some embodiments, generate one or more text strings based on the received audio data, as described previously. In some embodiments, the client device 102A-N can transmit a message with the generated audio data indicating that the audio data was generated in response to the participant interacting with the GUI element. In such embodiments, conference management component 122 can determine, based on the message, that the verbal phrase corresponds to a polling question and can present the polling question to other participants of the conference call, in accordance with embodiments described herein.

In other or similar embodiments, the participant can verbally provide the question for polling other participants without interacting with a GUI element, as described above. For example, the participant can provide one or more verbal phrases during a conference call. The audiovisual component of the client device 102A-N associated with the participant can generate audio data based on an audio signal recognizing the verbal phrases and can transmit the generated audio data to conference management component 122, in accordance with previously described embodiments. In some embodiments, conference management component 122 can provide the audio data to polling engine 151. In additional or alternative embodiments, conference management component 122 can generate one or more text strings including the verbal phrases and can provide the generated text strings to polling engine 151.

Conference management component 122 can receive one or more answers to a polling question in response to presenting the polling question to participants via the GUI. For example, the GUI provided by conference platform 120 can be modified to present the polling question and one or more GUI elements that allow a participant to provide an answer to the polling question. In some implementations, a GUI element can allow the participant to provide a verbal answer to the polling question. The client device 102A-N associated with the participant can detect that the participant has interacted with the GUI element and can initiate a recording function, in accordance with previously described embodiments. In response to detecting the participant has completed providing the verbal answer (e.g., the participant has subsequently interacted with the GUI element, the participant has stopped interacting with the GUI element, etc.), the client device 102A-N can terminate the recording function and can transmit audio data associated with the verbal answer to conference management component 122.

Conference management component 122 can generate one or more text strings based on the received audio data and can transmit one or more of the generated text strings including the verbal answer to a client device 102A-N of an additional participant that has not yet provided an answer to the polling question. Conference management component 122 can automatically (without any request from any user) populate a possible answer(s) (i.e., as populated polling answer 126) to the polling question for participants based on previously received answers. For example, the GUI provided by conference platform 120 can be modified to present a textual form of the polling answer 126 and a GUI element (e.g., a button) that allows the participant to provide a non-verbal answer to the polling question. For example, the additional participant can interact with the GUI element to provide an answer to the polling question that corresponds to the answer 126. Additionally or alternatively, the additional participant can interact with another GUI element that allows the participant to provide a verbal answer to the polling question. For example, if the additional participant does not agree with the answer 126 presented via the GUI, the additional participant can interact with the GUI element that allows the additional participant to provide a verbal response, in accordance with previous embodiments. The client device 102A-N can transmit data associated with a response provided by the additional participant (i.e., a verbal answer or a non-verbal answer) to conference management component 122. Further details regarding collecting and populating answers to a polling question are provided herein.

In some implementations, conference platform 120, a collaboration platform, and/or server machines 130-150, can operate on one or more computing devices (such as a rackmount server, a router computer, a server computer, a personal computer, a mainframe computer, a laptop computer, a tablet computer, a desktop computer, etc.), data stores (e.g., hard disks, memories, databases), networks, software components, and/or hardware components that may be used to enable a user to connect with other users via a conference call. In some implementations, the functions of conference platform 120 may be provided by a more than one machine. For example, in some implementations, the functions of conference management component 122 and polling engine 151 may be provided by two or more separate server machines. Conference platform 120 may also include a website (e.g., a webpage) or application back-end software that may be used to enable a user to connect with other users via the conference call.

It should be noted that in some other implementations, the functions of server machines 130, 140, and 150 or conference platform 120 may be provided by a fewer number of machines. For example, in some implementations server machines 130 and 140 may be integrated into a single machine, while in other implementations server machines 130, 140, and 150 may be integrated into multiple machines. In addition, in some implementations one or more of server machines 130, 140, and 150 may be integrated into conference platform 120.

In general, functions described in implementations as being performed by conference platform 120 or server machines 130, 140, 150 can also be performed on the client devices 102A-N in other implementations, if appropriate. In addition, the functionality attributed to a particular component can be performed by different or multiple components operating together. Conference platform 120 and/or server machines 130, 140, 150 can also be accessed as a service provided to other systems or devices through appropriate application programming interfaces, and thus is not limited to use in websites.

Although implementations of the disclosure are discussed in terms of conference platform 120 and users of conference platform 120 participating in a video and/or audio conference call, implementations can also be generally applied to any type of telephone call or conference call between users. Implementations of the disclosure are not limited to content sharing platforms that provide conference call tools to users.

In implementations of the disclosure, a "user" can be represented as a single individual. However, other implementations of the disclosure encompass a "user" being an entity controlled by a set of users and/or an automated source. For example, a set of individual users federated as a community in a social network can be considered a "user." In another example, an automated consumer can be an automated ingestion pipeline, such as a topic channel, of the conference platform 120.

In situations in which the systems discussed here collect personal information about users, or can make use of personal information, the users can be provided with an opportunity to control whether conference platform 120 collects user information (e.g., information about a user's social network, social actions or activities, profession, a user's preferences, or a user's current location), or to control whether and/or how to receive content from the content server that can be more relevant to the user. In addition, certain data can be treated in one or more ways before it is stored or used, so that personally identifiable information is removed. For example, a user's identity can be treated so that no personally identifiable information can be determined for the user, or a user's geographic location can be generalized where location information is obtained (such as to a city, ZIP code, or state level), so that a particular location of a user cannot be determined. Thus, the user can have control over how information is collected about the user and used by the conference platform 120.

**FIG. 2** is a block diagram illustrating a conference platform 120 and one example polling engine 151, in accordance with implementations of the present disclosure. As described with respect to **FIG. 1****,** conference platform 120 can provide tools to users of a client device 102 to join and participate in a video and/or audio conference call. Conference platform 120 can include a conference management component 122. Conference management component 122 can include a text string identifier module 210 and a transcript generation module 212. Polling engine 151 can facilitate polling of conference call participants. Polling engine can include a polling question model 220, an answer collection component 222, and a polling results component 224.

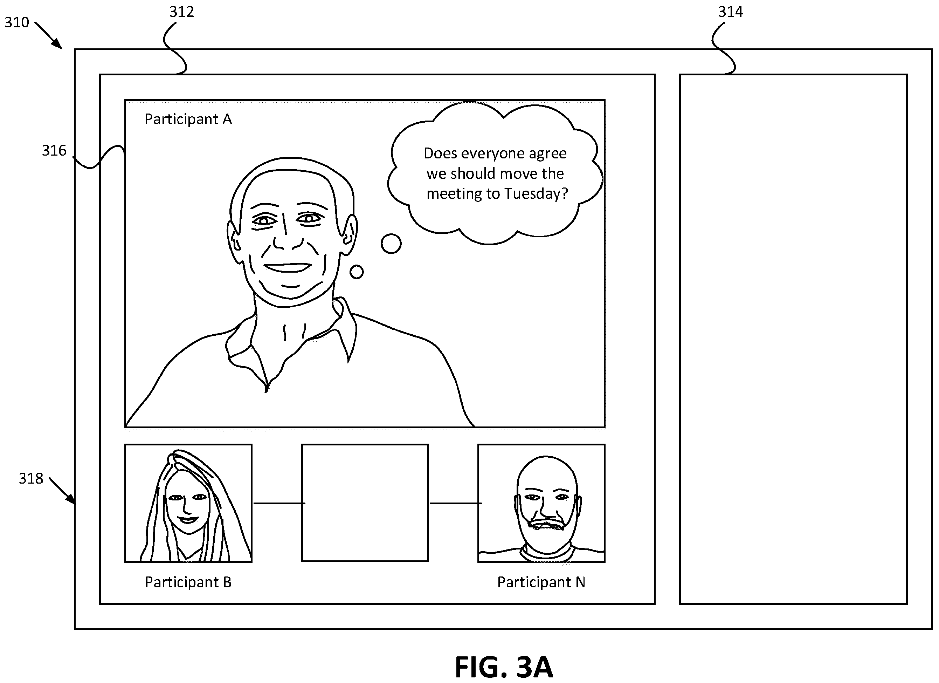

Text string identifier module 210 of conference management component 122 can identify text strings including a textual form of one or more verbal phrases provided by participants of a conference call. In some embodiments, the text strings can be identified during a conference call or based on a transcript 236 generated by transcript generation module 212 during or after completion of the conference call, in accordance with previously described embodiments. **FIG. 3A** illustrates a video conference call between multiple participants via conference platform 120. As illustrated, conference management component 122 provides a UI 310 to enable participants (e.g., participants A-N) to join and participate in a conference call. UI 310 is described as a UI displayed via a client device 102 associated with Participant A of the conference call. However, it should be noted that UI 310 can displayed on a client device 102 associated with any participants to the conference call.

UI 310 can include multiple sections, including a first section 312 and a second section 314. In some embodiments, the first section 312 can include one or more portions for outputting video data captured at the client devices associated with each participant. For example, the first section 312 can include at least a first portion 316 and a second portion 318 that each display video data captured by user devices associated with participants of the video conference call. In some implementations, the first portion 316 of section 312 can display video data captured by a user device associated with a participant that is providing verbal statements during the conference call (i.e., the participant that is currently speaking). In other words, the first portion 316 can display video data associated with a participant that is currently speaking. As illustrated in **FIG. 3A****,** Participant A is providing the verbal phrase "Does everyone agree we should move the meeting to Tuesday?" As such, the first portion 316 of section 312 displays video data captured by a client device associated with Participant A. Second portion 318 of section 312 can display video data captured by client devices of participants (e.g., Participants B-N) that are not providing verbal statements during the conference call (i.e., are not currently speaking). In other or similar embodiments, section 312 can include one or more sections that are configured to display video data associated with participants in accordance with other orientations. For example, section 312 can include a single portion that displays the video data captured by client devices of a participant that is currently speaking and does not display video data captured by client devices of participants that are not currently speaking. In another example, section 312 can include multiple portions that each display video data associated with a participant of the video conference call, regardless of whether a participant is currently speaking.

As illustrated in **FIG. 3A****,** Participant A can provide the verbal phrase "Does everyone agree we should move the meeting to Tuesday?" The audiovisual component of the client device associated with Participant A can capture an audio signal based on the verbal phrase and generate audio data (e.g., an audio file) based on the captured audio signal, in accordance with previously described embodiments. The client device can transmit the audio data to conference management component 122. In some embodiments, the client device can transmit an identifier of the participant that provided the verbal phrase with the audio data. In response to receiving the audio data, conference management component 122 can generate, based on the received audio data, one or more text strings including the verbal phrases provided by Participant A, in accordance with previously described embodiments. Text string identifier module 210 can identify the one or more text strings generated by conference management component as text strings to be provided to polling question model 220.

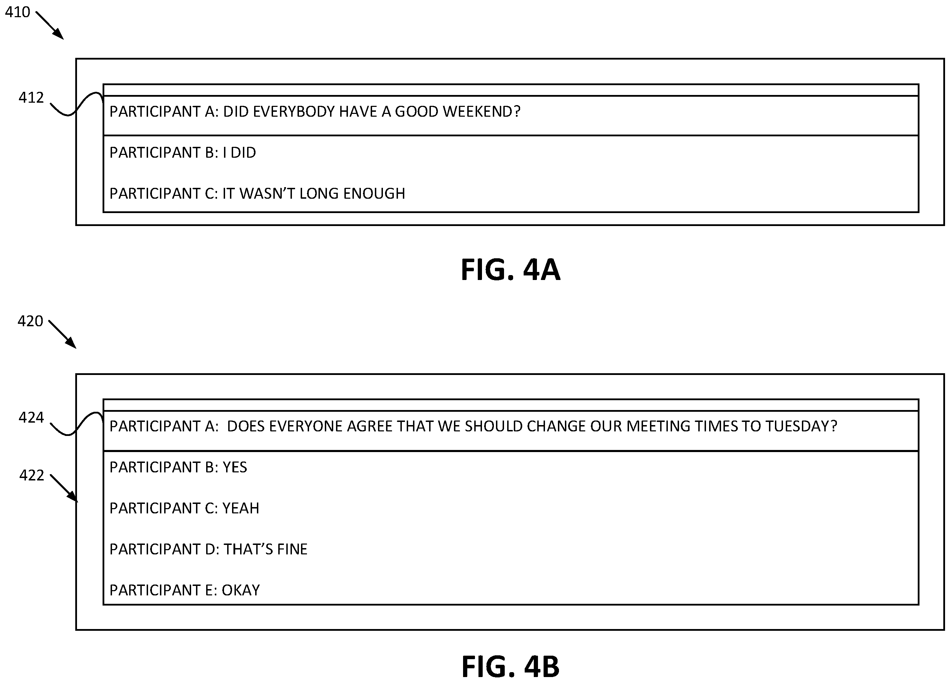

Referring back to **FIG. 2****,** text string identifier module 210 can identify the one or more text strings to be provided to polling question model 220 based on a transcript 236 generated by transcript generation module 212, as previously described. **FIGs. 4A-4B** illustrate portions of transcripts generated by transcript generation module 212, in accordance with previously described embodiments. In some embodiments, text string identifier module 210 can identify a text string including a verbal phrase provided by a participant of a conference call by parsing each text string included in the generated transcript. In such embodiments, text string identifier module 210 can identify each text string of a transcript as a text string to be provided as input to polling question model 220. In other or similar embodiments, text string identifier module 210 can parse each text string included in a generated transcript and determine whether each text string includes a phrase corresponding to a question. For example, as illustrated in **FIG 4A****,** text string identifier module 210 can parse each text string included in transcript 410 and determine that a first text string 412 includes a phrase that corresponds to a question (e.g., "Did everybody have a good weekend?"). In response to determining a text string includes a verbal phrase corresponding to a question, text string identifier module 210 can identify the text string as a text string to be provided as input to polling question model 220.

In some embodiments, text string identifier module 210 can identify a text string including a verbal phrase corresponding to a question by identifying portions of the transcript that include one or more verbal phrases that correspond to answers to a question (e.g., yes, no, etc.). In some embodiments, text string identifier module 210 can identify text strings that correspond to answers to a question based on a previously defined list of phrases that correspond to answers to a question (e.g., stored at data store 110). For example, a previously defined list of phrases corresponding to answers can include phrases or words such as "yes," "no," or "maybe." As illustrated in **FIG. 4B****,** a first portion 422 of transcript 420 includes a verbal phrase provided by participant B (i.e., "yes"), which is included in the previously defined list of phrases corresponding to an answer. In other or similar embodiments, text string identifier module 210 can determine that a phrase corresponds to an answer to a question based on a context of the phrase. For example, the phrases provided by participants C, D, and E, included in portion 422 of transcript 420, are not included in the previously defined list of phrases. However, text string identifier module 210 can determine that a context of each phrase provided by C, D, and E (e.g., "yeah," "that's fine," and "okay," respectively) corresponds to a context of the phrase "yes," which is included in the list of previously device phrases. Text string identifier module 210 can identify portions of a transcript including phrases corresponding to answers to a question in accordance with other embodiments. In some embodiments, text string identifier module 210 can identify portions of a transcript where multiple participants of the conference call provided the same, or similar, verbal phrases. For example, text string identifier module 210 can identify portions of a transcript where multiple participants provided a verbal phrase including the word indicating a day of the week.

In response to identifying a portion of a transcript that includes verbal phrases corresponding to answers to a question, text string identifier module 210 can parse portions of the transcript surrounding the identified portion and determine whether a surrounding portion includes a verbal phrase that corresponds to a question. For example, as illustrated in **FIG. 4B****,** text string identifier module 210 can identify the first portion 422 of transcript 420 includes verbal phrases corresponding to an answer to a question. Text string identifier module 210 can parse transcript 420 to identify surrounding portions that include a verbal phrase that corresponds to a question. As illustrated in **FIG 4B****,** portion 424, which is adjacent to portion 422, includes a question provided by participant A (e.g., "Does everyone agree that we should change our meeting times to Tuesday?"). As such, text string identifier module 210 can identify the text string included in portion 424 of transcript 420 as a text string to be provided to polling question model 220.

Referring back to **FIG. 2****,** in response to identifying one or more text strings, conference management component 122 can provide the identified text strings as input to polling question model 220. In some embodiments, other audio data (e.g., a portion of an audio file) for the conference call can be provided as input to polling question model 220. As described previously, polling question model 220 can receive, as input, one or more text strings including verbal phrases provided by participants of a conference call and provide, as output, a level of confidence associated with the one or more text strings, the level of confidence indicating a likelihood that the one or more text strings includes a question for polling other participants of the conference call. In some embodiments, conference management component 122 can obtain one or more attributes associated with the phrase included in each text string, such as the attributes obtained by attribute component 132 described with respect to **FIG. 1****.** In such embodiments, conference management component 122 can also provide each obtained attribute as input to polling question model 220. In other or similar embodiments, conference management component 122 can provide the audio data received from the client device associated with participant A as input to polling question model 220 in addition to or instead of the identified one or more text strings. For example, conference management component 122 can provide an audio file including an audio recording of the verbal phrase as input to polling question model 220, in accordance with previously described embodiments.

In response to providing the one or more identified text strings (or the audio file including the verbal phrase) as input to polling question model 220, conference management component 122 can receive, as an output, a level of confidence associated with verbal phrase. Conference management component 122 can determine whether the verbal phrase corresponds to a question for polling by determining whether the level of confidence associated with the verbal phrase satisfies a confidence criterion. In some embodiments, conference management component 122 can determine a level of confidence satisfies a confidence criterion in response to determining the level of confidence associated with the verbal phrase meets or exceeds a threshold level of confidence. In response to determining the level of confidence for the verbal phrase satisfies the confidence criterion, conference management component 122 can designate the verbal phrase as a question for polling other participants of the conference call. In response to conference component 122 designating the verbal phrase as a question for polling, conference management component 122 and/or polling engine 151 can store the designated polling question 232 at data store 110.

In some embodiments, polling question model 220 can also provide, as an output, one or more potential responses to the verbal phrase, as previously described. In response to designating the verbal phrase as a polling question, conference management component 122 can designate the one or more potential responses as potential answers to the polling question and can store the potential answers at data store 110.

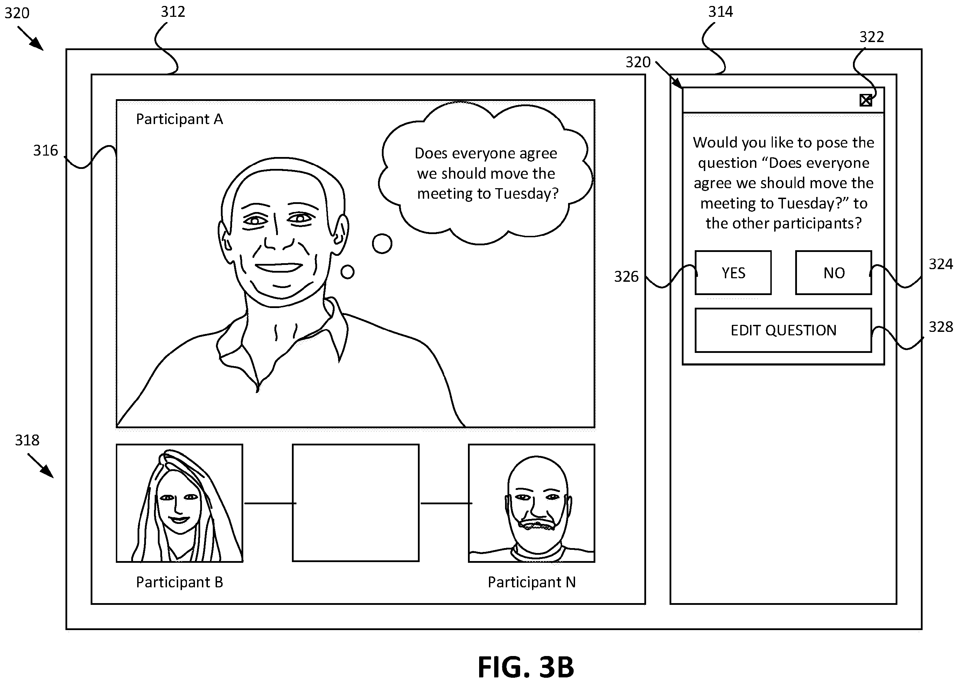

As described previously, conference management component 122 can designate a verbal phrase included in one or more text strings as a question for polling during the conference call. In such embodiments, in response to designating a verbal phrase as a question for polling, conference management component 122 can generate and transmit, to a client device associated with the participant that provided the designated verbal phrase, a message inquiring whether the participant would like to pose the question to the other conference call participants. **FIG. 3B** illustrates a message provided to Participant A after conference management component 122 designates a verbal phrase provided by participant A (e.g., "Does everyone agree we should move the meeting to Tuesday?") as a question for polling. As illustrated, second section 314 of UI 310 can display a message 320 to Participant A inquiring whether Participant A would like to pose the designated question to the other participants (e.g., participants B-N) of the conference call.

In some embodiments, message 320 can include one or more elements to enable Participant A to pose, or not pose, the designated question to the other participants. For example, message 320 can include a first element 322, which enables Participant A to dismiss the message 320. In response to receiving a notification that Participant A interacted with element 322 (e.g., clicked, selected, etc.), the client device associated with Participant A can remove message 320 from the second section 314 of UI 310. In some embodiments, client device can generate and transmit a notification to conference management component 122 indicating that Participant A dismissed message 320. In response to receiving the notification, conference management component 122 can determine that the previously designated question did not correspond to a question for polling participants of the conference call and can provide feedback based on this determination to polling engine 151 and/or training set generator 131 for further training of polling question model 220.

Message 320 can further include a second element 324 configured to enable Participant A to decline posing the question to the other participants of the conference call. In response to receiving a notification that Participant A interacted with element 324, the client device associated with Participant A can generate and transmit a notification to conference management component 122 indicating that Participant A would not like to pose the designated question to the other participants of the conference call. Conference management component 122 can provide feedback to polling engine 151 and/or training set generator 131 in response to receiving the notification, in accordance with previously described embodiments.

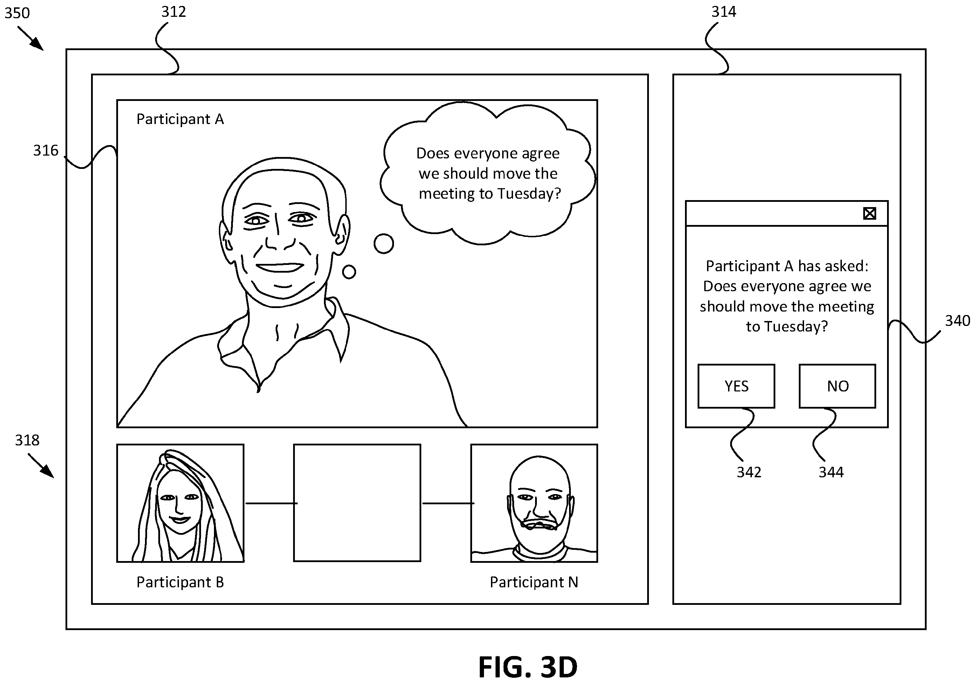

Message 320 can further include a third element 326 configured to enable Participant A to pose the question to the other participants of the conference call. In response to receiving a notification that Participant A interacted with element 326, the client device associated with Participant A can generate and transmit a notification to conference management component 122 indicating that Participant A would like to pose the designated question to the other participants. Conference management component 122 can pose the question to the other participants of the call, in accordance with embodiments described with respect to **FIG. 3D****.**

Message 320 can further include a fourth element 328 configured to enable Participant A to edit the designated polling question included in message 320. In response to receiving a notification that Participant A interacted with element 328, the client device associated with Participant A can provide an additional element (not shown) via the second section 314 of UI 310 configured to enable Participant A to edit one or more portions of the designated polling question. For example, the client device can provide a text box in or around the second section 314 of UI 310 to enable Participant A to modify one or more words or phrases included in the designated polling question. In response to receiving a modification to a designated polling question, the client device can generate and transmit a notification to conference management component 122 including the modification to the polling question. Conference management component 122 can provide feedback to polling engine 151 and/or training set generator 131 based on the received notification, in accordance with previously described embodiments.

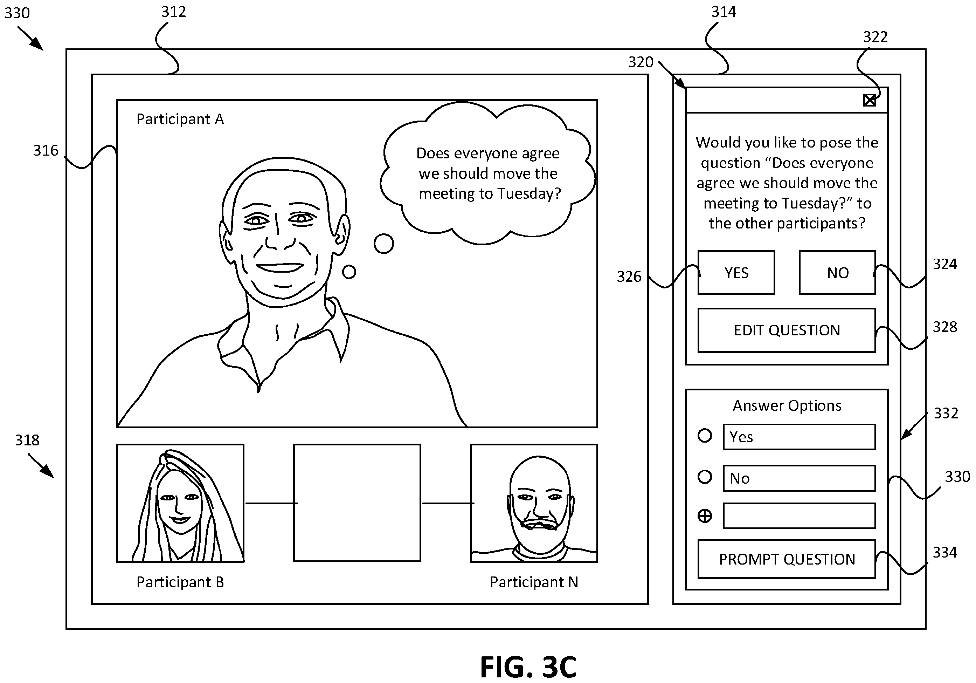

In some embodiments, in response to receiving an indication that Participant A interacted with element 326 (i.e., to indicate he or she would like to pose the designated polling question to the other participants of the conference call), the client device associated with Participant A can modify one or more portions of UI 310 to include an additional message 330. In some embodiments, the additional message 330 can enable a participant to customize one or more settings associated with posing the question to the other participants of the conference call. For example, as illustrated in **FIG. 3C****,** message 330 provides, to Participant A, answer options that can be associated with the question posed to the other participants. As illustrated, message 330 includes one or more first elements 332 configured to enable Participant A to specify one or more answer options associated with the polling question. For example, Participant A can specify that the answer options associated with the polling question "Does everyone agree we should move the meeting to Tuesday?" include "yes" or "no." In some embodiments Participant A can specify the one or more answer options by interacting with the one or more first elements 332 of message 330. For example, Participant A can type or otherwise provide the one or more answer options via the one or more first elements 332 of message 330.

In other or similar embodiments, message 330 can include one or more additional elements (not shown) that enable Participant A to verbally provide the one or more answer options for the polling question. For example, Participant A can interact with (i.e., click) on the one or more additional elements and verbally provide the one or more answer options for the polling question. In response to determining Participant A has interacted with the one or more additional elements, the client device associated with Participant A can generate audio data including one or more verbal phrases provided by Participant A, in accordance with previously described embodiments. In some embodiments, the client device associated with Participant A can convert the audio data to one or more text strings including the verbal phrase. The client device can parse the one or more text strings and identify one or more answers to the question included in the verbal phrase. In response to identifying the one or more answers to the question, the client device associated with Participant A can modify message 330 to include each identified answer provided by Participant A. As described above, the client device can identify the one or more answers to the polling question. In other or similar embodiments, the client device associated with Participant A can transmit a message to conference management component 122 including the audio data. Conference management component 122 can identify the one or more answers to the polling question and transmit the identified answers to the client device associated with Participant A, in accordance with previously described embodiments.

In other or similar embodiments, message 330 can include answer options determined to be associated with the polling question (e.g., by conference management component 122), in accordance with previously described embodiments. It should be noted that, although embodiments of the present disclosure are directed to enabling Participant A to specify one or more answer options associated with the polling question, message 330 can include additional settings associated with the polling question that can be specified by Participant A. For example, message 330 can include an element to enable Participant A to specify particular participants to pose the question to.

Message 330 can include a second element 334 configured to enable Participant A to pose the question to one or more participants of the conference call. In response to receiving an indication that participant A has interacted with element 334, the client device can generate and transmit a notification to conference management component 122 indicating that Participant A would like to pose the question to other participants of the conference call. In some embodiments, the notification can include an indication of any modifications provided to the question and/or an indication of any settings (e.g., answer options) associated with the polling question.

In response to receiving the notification, conference management component 122 can cause a UI on each client device associated with the other participants of the conference call (e.g., Participants B-N) to display a message including the posed question. **FIG. 3D** illustrates a UI 350 for Participant B of the conference call. As illustrated, the client device associated with Participant B updates section 314 of UI 350 to include a message 340. Message 340 can include one or more UI elements configured to enable Participant B to provide a response to the polling question. In some embodiments, each element of message 340 can correspond to a specified answer option provided by Participant A, in accordance with previously described embodiments. For example, as illustrated in **FIG. 3D****,** message 340 can include a first element 342 associated with a response corresponding to an answer "yes," and a second element 344 associated with a response corresponding to an answer "no." Participant B can provide a response of "yes" or "no" by interacting with a respective element. In other or similar embodiments, message 340 does not include one or more elements associated with a specified answer option provided by Participant B. In such embodiments, message 340 can include one or more elements (not shown) configured to enable Participant B to provide a customized answer to the polling question. For example, message 340 can include a text box configured to enable Participant B type a customized answer to the polling question. In response to detecting that Participant B has provided a response to the polling question (e.g., has interacted with either element 342 or element 344, etc.), the client device associated with Participant B can generate and transmit a notification indicating the response to the polling question provided by Participant B.

Referring back to **FIG. 2****,** in response to receiving the response to the polling question from a participant to the conference call, conference management component 122 can provide the received response to answer collection component 222. Answer collection component 222 can store the received response (i.e., the answer to the polling question) as a collected answer 234 at data store 110. In some embodiments, answer collection component 222 can generate a mapping between the designated polling question and the collected answer 234 and store the matting at data store 110.

During the conference call, polling question model 220 can identify one or more polling questions 232 and answer collection component 222 can collect answers to the polling questions provided by participants of the conference call. During or after the conference call, polling results component 224 can generate results for each polling question stored at data store 110. For example, polling results component 224 can identify each polling question 232 posed during the conference call at data store 110 and each collected answer associated with each polling question 232. Polling results component 224 can analyze each collected answer for each polling question 232 and generate data associated with each polling question 232 based on the analysis. The generated data can be stored as polling results 238 at data store 110. In some embodiments, the generated data can include a number of participants that provided a particular answer to the polling question. In accordance with the previously provided example, polling results component 224 can determine a number of participants that answered "yes" and "no" to the polling question "Does everyone agree we should move the meeting to Tuesday?" In other or similar embodiments, polling results 238 can include data associated with participants that provided particular answers. For example, polling results component 224 can determine that a particular portion of participants that answered "yes" to the polling question are associated with particular characteristics (e.g., identified via a profile associated with each participant).

As described previously, text string identifier module 210 can identify text strings to be provided to polling question model 220 after completion of a conference call (e.g., from transcript 236). Conference management component 122 can provide each identified text string as input to polling question model 220 and receive, as output, a level of confidence indicating a likelihood that the identified text string includes a verbal statement corresponding to a polling question. Conference management component 122 can determine whether the verbal phrase corresponds to a polling question based on the level of confidence, in accordance with previously described embodiments. Referring to **FIGs. 4A and 4B****,** conference management component 122 can determine, based on a level of confidence provided by polling question model 220, that text string 412 (i.e., including the question "Did everybody have a good weekend?") does not include a verbal statement corresponding to a polling question and text string (i.e., including the question "Does everyone agree that we should change our meeting time to Tuesday?") does include a verbal statement corresponding to a polling question. Polling engine 151 can store the question included in text string at data store 110, in accordance with previously described embodiments.

Answer collection component 222 can identify answers corresponding to each designated polling question 232 included in a transcript 236. Answer collection component 222 can identify one or more text strings located within a particular proximity to a text string of transcript 236 including the designated polling question. In some embodiments, the particular proximity can correspond to a distance between a text string including the designated polling question and additional text strings of the transcript, where the distance corresponds to a number of participants of the conference call). Answer collection component 222 can determine whether each identified text string includes a verbal phrase corresponding to an answer to the designated polling question. In response to determining a text string includes a verbal phrase corresponding to an answer to the designated polling question, answer collection component 222 can generate a mapping between the answer and the polling question and store the mapping and/or the answer at data store 110. As illustrated in **FIG. 4B****,** answer collection component 222 can determine each text string located within a particular proximity to text string (i.e., text strings included in portion 422) includes a verbal phrase corresponding an answer to the polling question "Does everyone agree that we should change our meeting time to Tuesday?" As such, answer collection component 222 can generate a mapping between each answer included in a text string and the designated polling question and store the mapping and/or each answer at data store 110.

Polling results component 224 can generate polling results 238 for polling questions and answers identified from transcript 236, in accordance with embodiments described above. In response to polling results component 224 generating polling results 238, conference management component 122 can provide polling results 238 to a client device 102 associated with one or more participants of the conference call. For example, conference management component 122 can provide polling results 238 to client device associated with an organizer of the conference call.

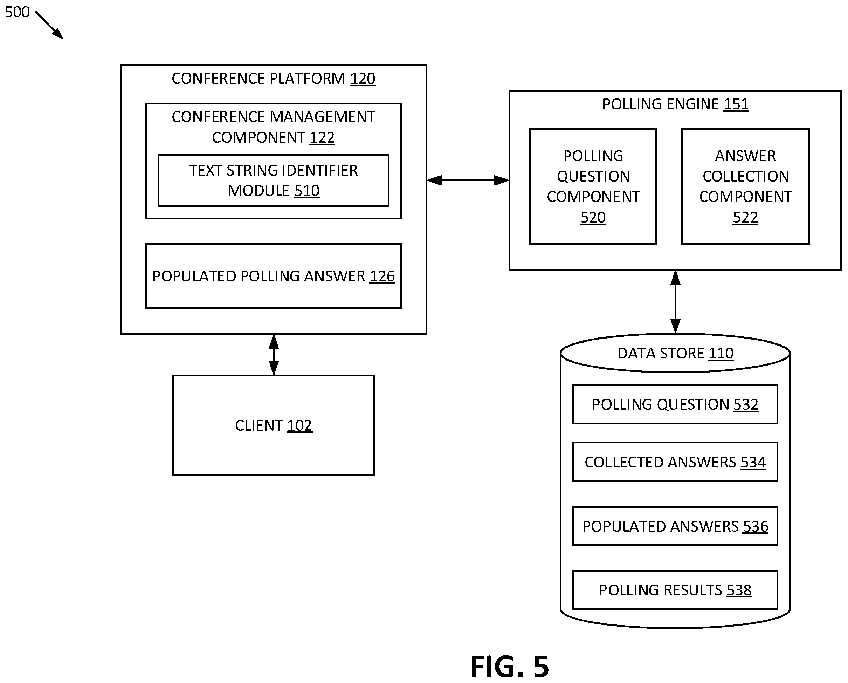

**FIG. 5** is a block diagram illustrating a conference platform 120 and another example polling engine 151, in accordance with implementations of the present disclosure. In some embodiments, polling engine 151 illustrated in **FIG. 5** can be the same or similar to polling engine 151 described with respect to **FIG. 2****.** In other or similar embodiments, polling engine 151 illustrated in **FIG. 5** can be a different polling engine as polling engine 151 described with respect to **FIG. 2****.**

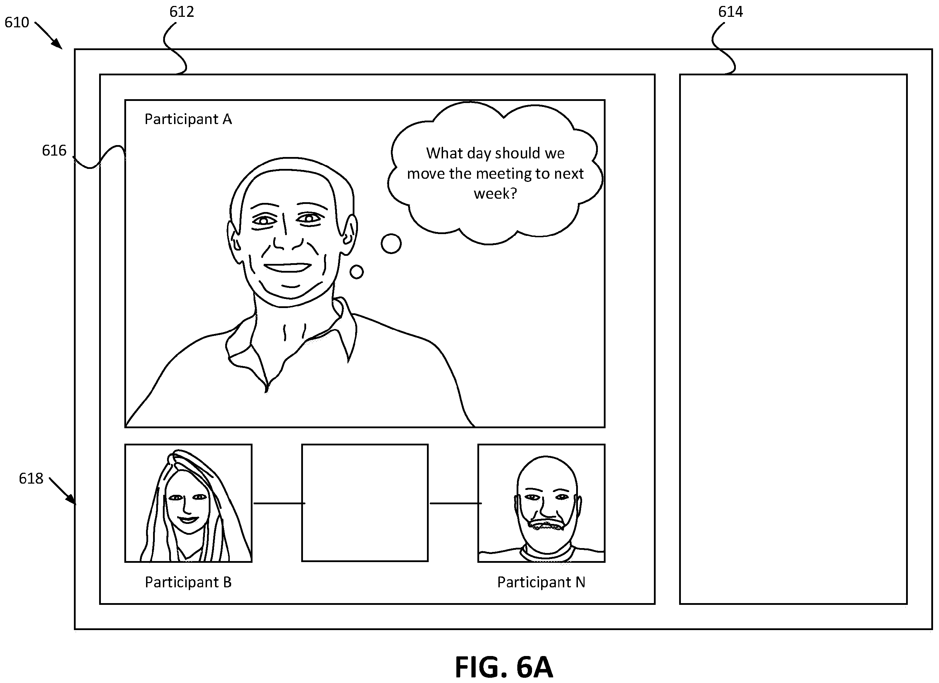

As described with respect to **FIG. 1****,** conference platform 120 can provide tools to users of a client device 102 to join and participate in a video and/or audio conference call. Conference platform 120 can include a conference management component 122. Conference management component 122 can include a text string identifier module 510. In some embodiments, text string identifier module 510 can correspond to text string identifier module 210, as described above. As described above. polling engine 151 can facilitate polling of conference call participants. Polling engine 151 can include a polling question component 520 and an answer collection component 522. In some embodiments, answer collection component 522 can correspond to answer collection component 222 described above. One or more operations performed by conference management component 122 and/or polling engine 151 are described with respect to **FIGs. 6A-6D****.**

**FIG. 6A** illustrates an example user interface (UI) for a video conference call between multiple participants via conference platform 120, in accordance with some implementations of the disclosure. As illustrated, conference management component 122 provides a UI 610 to enable participants (e.g., participants A-N) to join and participate in a conference call. UI 610 is described as a GUI displayed via a client device 102 associated with Participant A of the conference call. However, it should be noted that UI 610 can displayed on a client device 102 associated with any participants to the conference call. In some embodiments, UI 610 can correspond to UI 310 described above.

UI 610 can have multiple sections, including a first section 612 and a second section 614. In some embodiments, the first section 614 can include one or more portions for outputting video data captured at the client devices associated with each participant. For example, the first section 612 can include at least a first portion 616 and a second portion 618 that each display video data captured by user devices associated with participants of the video conference call. In some implementations, the first portion 616 of section 612 can display video data captured by a user device associated with a participant that is providing verbal statements during the conference call (i.e., the participant that is currently speaking). In other words, the first portion 616 can display video data associated with a participant that is currently speaking. As illustrated in **FIG. 6A****,** Participant A is providing the verbal phrase "What day should we move the meeting to next week?" As such, the first portion 616 of section 612 displays video data captured by a client device associated with Participant A. Second portion 618 of section 612 can display video data captured by client devices of participants (e.g., Participants B-N) that are not currently providing verbal statements during the conference call (i.e., are not currently speaking). In other or similar embodiments, section 612 can include one or more sections that are configured to display video data associated with participants in accordance with other orientations. For example, section 612 can include a single portion that displays the video data captured by client devices of a participant that is currently speaking and does not display video data captured by client devices of participants that are not currently speaking. In another example, section 612 can include multiple portions that each display video data associated with a participant of the video conference call, regardless of whether a participant is currently speaking.

As described previously, a participant of a conference call can provide a polling question to be presented to other participants of the conference call. For example, Participant A can provide the verbal phrase "What day should we move the meeting to next week?" In some embodiments, Participant A can provide the verbal phrase in response to interacting with a particular GUI element (not shown) of UI 610 that initiates a recording operation by an audiovisual component of the client device associated with Participant A. The audiovisual component of the client device can capture an audio signal based on the provided verbal phrase and generate audio data (e.g., an audio file) based on the captured audio signal, in accordance with previously described embodiments. On other or similar embodiments, the audiovisual component can capture the audio signal without Participant A interacting with the particular GUI element to initiate the recording operation. The client device can transmit the audio data to conference management component 122. In some embodiments, the client device can transmit an identifier of the participant that provided the verbal phrase with the audio data. In response to receiving the audio data, conference management component 122 can generate, based on the received audio data, one or more text strings including the verbal phrases provided by Participant A, in accordance with previously described embodiments.

Referring back to **FIG. 5****,** text string identifier module 510 can determine to provide the one or more text strings generated by conference management component 122 to polling question component 520. In some embodiments, text string identifier module 510 can determine to provide the one or more text strings to polling question component 520 in response to determining the verbal phrase provided by Participant A corresponds to a question phrase. For example, text string identifier module 510 can parse each received text string and determine that a context of the text string corresponds with a context of a question phrase. In some embodiments, polling question component 520 can provide a text string received from text string identifier module 510 as input to a trained machine learning model. The machine learning model can be trained to receive, as an input, text strings including a textual form of one or more verbal phrases and provide, as output, a level of confidence that a verbal phrase of the received text strings includes a question associated with polling. Polling question component 520 can obtain one or more outputs from the trained machine learning model and determine, based on the received output, whether a level of confidence for a verbal phrase satisfies a confidence criterion (e.g., whether the level of confidence for the verbal phrase exceeds a threshold level of confidence). In response to determining the level of confidence satisfies the confidence criterion, polling engine 151 can designate the verbal phrase as a polling question 532 and store the polling question 532 at data store 110.

In other or similar embodiments, polling question component 520 can determine whether a verbal phrase associated with a text string is a polling question 532 based on a message received by conference management component 122 with audio data for the verbal phrase. For example, Participant A can interact with a GUI element to initiate the recording operation at the client device. In such example, the client device can transmit a message with audio data associated with the recorded verbal phrase that indicates the verbal phrase corresponds to a polling question. Polling question component 520 can designate the verbal phrase as a polling question 532, in view of the received message, and store the polling question 532 at data store 110.

In some implementations, polling question component 520 can cause the UI to present the polling question 532 to Participant A only (or alternatively to some participants designated by Participant A) and request Participant A to confirm that Participant A wants the polling question 532 to be presented to other participants (all other participants or some of the other participants as designated by Participant A).

As described above, in some embodiments, Participant A can provide a polling question for presentation to other participants (e.g., Participants B-N) without providing a verbal phrase. For example, Participant A can type the polling question into a textbox GUI element. In such embodiments, conference management component 122 can receive the non-verbal phrase from the client device associated with Participant A along with a message indicating that the non-verbal phrase corresponds with a polling question. Conference management component 122 can transmit a text string including the non-verbal phrase to polling question component 520. Polling question component 520 can designate the non-verbal phrase as a polling question based on the received message from the client device, in accordance with previously described embodiments.

In response to polling question component 520 designating a phrase (verbal or non-verbal) as a polling question, conference management component 122 can transmit a textual form of the polling question 532 for presentation at client devices associated with additional participants of the conference call. For example, in response to polling question component 520 designating a verbal phrase provided by Participant A as a polling question 532, conference management component 122 can transmit the textual form of the polling question 532 for presentation at client devices associated with Participants B-N.

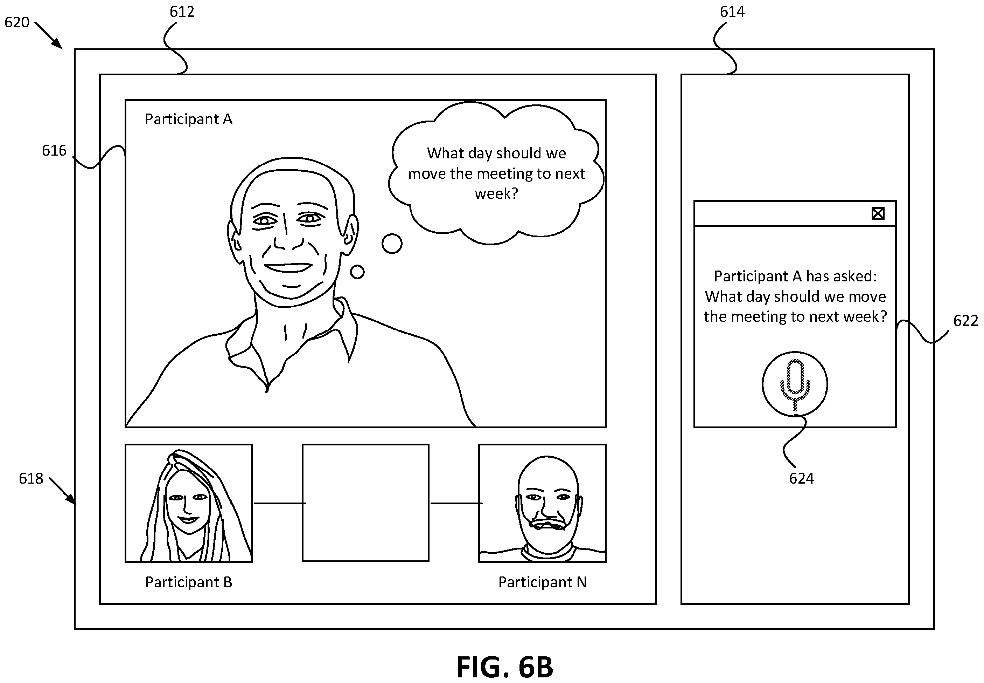

**FIG. 6B** illustrates a sample UI 620 for Participant B responding to a polling question during the conference call. As illustrated, in response to polling question component 620 designating the question "What day should we move the meeting to next week?" as a polling question 532, conference management component 122 causes UI 620 to present a message 622 including the posed question at section 614. In some embodiments, section 614 also includes a GUI element 624 that allows Participant B to provide a verbal answer to the polling question. In response to Participant B interacting with GUI element 624, the client device associated with Participant B can initiate a recording operation to generate audio data for the provided verbal answer, in accordance with previously described embodiments. The client device can transmit the audio data associated with the provided verbal answer to conference management component 122 and conference management component 122 can generate one or more text strings including the provided verbal answer, as previously described. In some embodiments, the client device can also transmit a message to conference management component 122 indicating that the provided verbal answer corresponds to an answer phrase, as the verbal phrase was provided in response to UI 620 presenting polling question 232.

Referring back to **FIG. 2****,** text string identifier module 510 can determine whether the provided verbal answer included in the one or more text strings corresponds to an answer phrase. For example, text string identifier module 510 can parse each text string and determine that a context of the text string corresponds with a context of an answer phrase. In another example, text string identifier module 510 can determine that the provided verbal answer corresponds to an answer phrase based on the received message from the client device, in accordance with previously described embodiments. In response to determining the provided verbal answer corresponds to an answer phrase, text string identifier module 510 can provide the one or more text strings including the verbal answer to polling answer component 522.

Polling answer component 522 can store the provided verbal answer as a collected answer 524 at data store 110. In some embodiments, polling answer component 522 can determine whether a textual form of the provided verbal answer is to be presented to one or more additional participants of the conference call as a candidate answer for polling question 532. Polling answer component 522 can determine that the provided verbal answer is to be presented to the additional participants in response to determining that the provided verbal answer satisfies an answer criterion. A provided answer can satisfy the answer criterion in response to polling answer component 522 determining that the number of participants of the conference call that provided a corresponding answer satisfies a threshold number. For example, in response to the polling question "What day should we move the meeting to next week?" Participant B can provide the verbal answer of "Wednesday." Polling answer component 522 can determine, based on collected answers 534, a number of additional participants of the conference call that also provided an answer (verbal or non-verbal) of "Wednesday." In response to determining that the total number of answers that correspond to the answer "Wednesday" satisfies a threshold number, polling answer component 522 can determine that the textual form of the provided verbal answer is to be presented to one or more participants of the conference call (only additional participants or alternatively one or more additional participants as well as Participant B). In some embodiments, polling answer component 522 can determine that the provided verbal answer is to be presented to the participants in response to receiving the one or more text strings including the verbal answer and without determining whether the verbal answer satisfies the answer criterion.

In some embodiments, polling answer component 522 can determine one or more additional answer candidates to be presented to the additional participants with the provided verbal answer. For example, polling answer 522 can determine that a context of the verbal answer provided by Participant B ("Wednesday") corresponds to a day of the week. Polling answer 522 can determine, based on the answer context, that answers to the polling question correspond to a particular day of the week and can designate the polling question as a "day of the week" type question. In response to designating the polling question as a "day of the week" type question, polling answer component 522 can determine one or more answer candidates that correspond to a "day of the week: type question (e.g. Monday, Tuesday, Thursday, Friday, etc.). Polling answer component 522 can determine the one or more answer candidates are to be presented to the participants with the verbal answer and can store the answer candidates as populated answers 536 at data store 110.

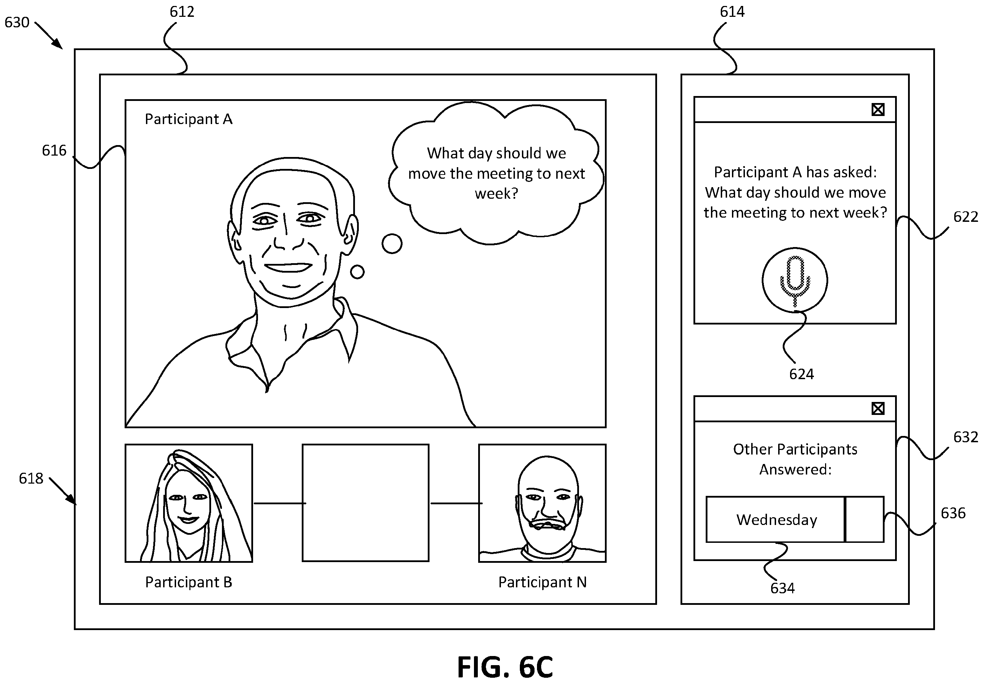

**FIGs. 6C-6D** illustrate sample UIs populating, for additional participants of the conference call, answers to the polling question based on the verbal answer(s) previously provided by other participant(s), in accordance with implementations of the present disclosure.

**FIG. 6C** illustrates a sample UI 630 for Participant C responding to a polling question during the conference call. As illustrated, in response to polling answer component 522 determining the verbal answer provided by Participant B is to be presented to additional participants of the conference call, conference management component 122 causes UI 630 to present a message 632 including the textual form of the verbal answer 634 at section 614. In some embodiments, section 614 also includes a GUI element 636 that allows Participant C to provide a non-verbal answer to the polling question. It should be noted that message 632 and/or GUI element 636 can be provided in a different section from section 614 of UI 630. Participant C can interact with GUI element 636 to provide a non-verbal answer to the polling question that corresponds with the verbal answer. For example, GUI element 636 can be a button element that Participant C can select in order to provide a non-verbal answer that corresponds with the answer of "Wednesday." Alternatively, GUI element 636 can be a check box, a button or another UI element that allows a participant to confirm that the generated text (e.g., "Wednesday") is their answer to the polling question or in some implementations, to reject the generated text (e.g., "Wednesday") as their answer to the polling question. In some implementations, GUI element 636 is an element located separately from or next to the UI element displaying the generated text (e.g., "Wednesday"). In some embodiments, message 632 can also include the textual form of each answer candidate identified by polling question component 220 (not shown), in accordance with previously described embodiments, and one or more additional GUI elements that allow Participant C to provide a non-verbal answer corresponding with an answer candidate.

Additionally or alternatively, Participant C can interact with GUI element 624 to provide a verbal answer to the polling question. For example, Participant C may want to provide a different answer than the answer option (i.e., verbal answer 634, answer candidates (not shown)) included in message 632. As such, Participant C can provide a verbal answer to the polling question by interacting with GUI element 624, in accordance with previously described embodiments. In other or similar embodiments, Participant C can interact with an additional GUI element (not shown) to provide a non-verbal answer to the polling question (e.g., type a non-verbal answer in a text box element). A client device associated with Participant C can transmit data associated with the provided answer (verbal or non-verbal) to conference management component 122, as described previously.

Conference management component 122 can receive data associated with an answer (verbal or non-verbal) provided by Participant C, in accordance with previously described embodiments. In some embodiments, polling answer component 122 can determine that the answer provided by Participant C is to be presented to additional participants of the conference call. For example, Participant C can provide an answer of "Friday" to the polling question. In some embodiments, polling answer component 122 can determine that the provided answer satisfies an answer criterion and is to be presented to additional participants of the conference call, in accordance with previously described embodiments.

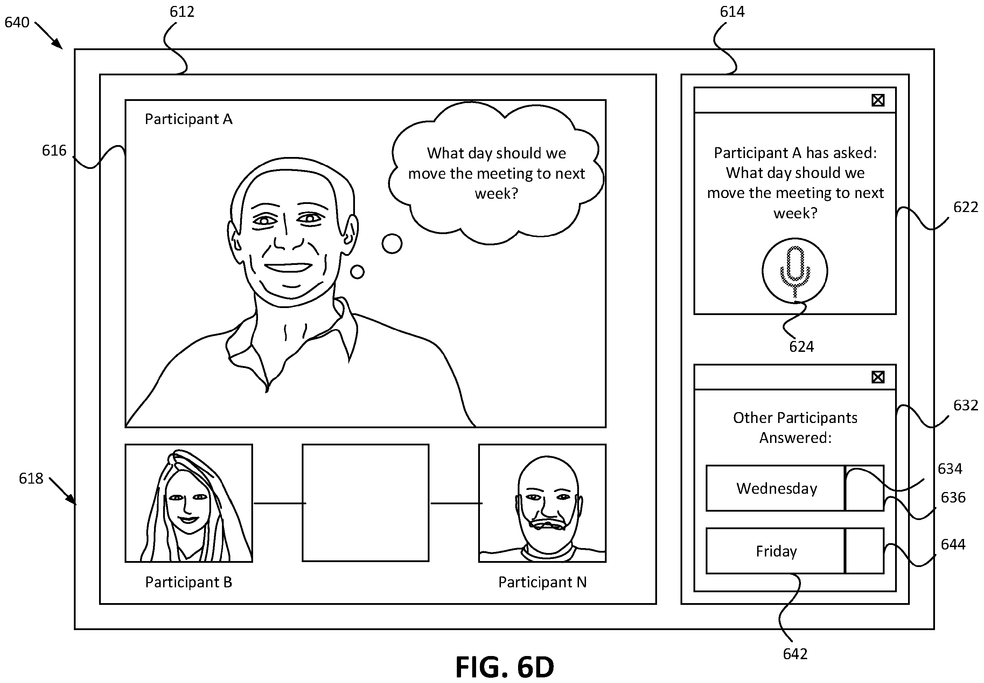

**FIG. 6D** illustrates a sample UI 640 for Participant D responding to a polling question during the conference call, in accordance with some implementations. As illustrated, in response to polling answer component 122 determining that the answer provided by Participant C satisfies the answer criterion, conference management component 122 causes a section of UI 640 include a textual form of the answer 642 (verbal or non-verbal). For example, answer 642 can be provided in message 632 at section 614. In some embodiments, section 614 (or another section of UI 640) also includes a GUI element that allows Participant D to provide a non-verbal answer to the polling question, in accordance with previously described embodiments. Additionally or alternatively, Participant D can interact with an additional GUI element (e.g., GUI element 624) to provide a different answer to the polling question, as previously described.

In some implementations, GUI elements 636 and 644 can be provided as check boxes, buttons or other type of UI element that allow a participant to confirm that the generated text (e.g., "Wednesday" or "Friday") is their answer to the polling question (or optionally to reject the generated text (e.g., "Wednesday" and/or "Friday") as their answer to the polling question). In some implementations, GUI elements 636 and 644 are elements located separately from or next to respective UI elements displaying the generated text (e.g., "Wednesday" and "Friday").

In some embodiments, a polling results component (not shown) can generate polling results 538 for polling questions 532 and answers 534 stored at data store 110. In response to the polling results component generating polling results 538, conference management component 122 can provide polling results 538 to a client device 102 associated with one or more participants of the conference call. For example, conference management component 122 can provide polling results 538 to client device associated with an organizer of the conference call.

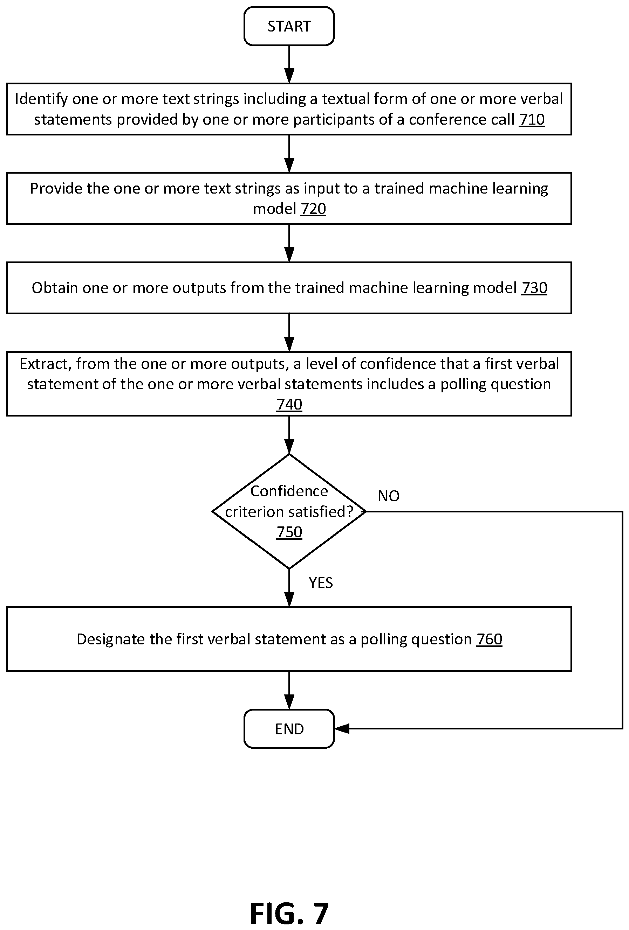

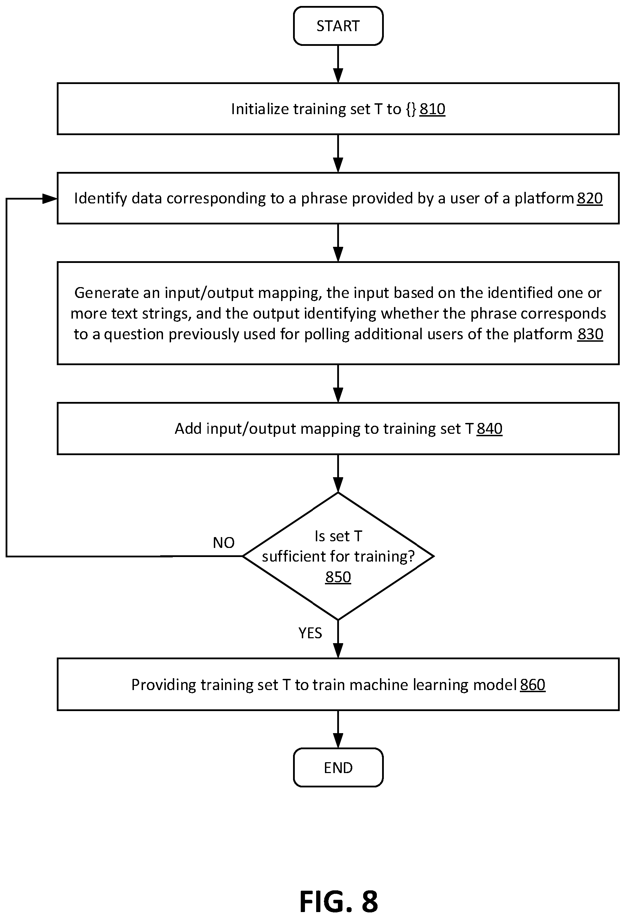

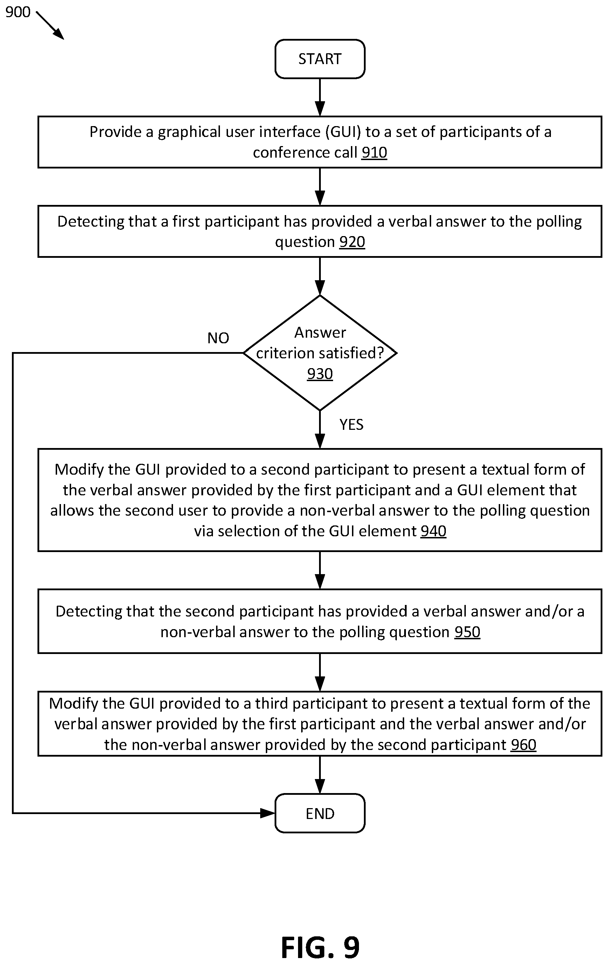

**FIG. 7** depicts a flow diagram of a method 700 for designating a verbal phrase provided during a conference call as a polling question, in accordance with implementations of the present disclosure. **FIG. 8** depicts a flow diagram of a method 800 for training a machine learning model to identify a verbal phrase provided during a conference call that corresponds with a polling question, in accordance with implementations of the present disclosure. **FIG. 9** depicts a flow diagram of a method 900 for populating answers to polling questions based on initial responses, in accordance with implementations of the present disclosure. Methods 700, 800, and 900 may be performed by processing logic that may include hardware (circuitry, dedicated logic, etc.), software (e.g., instructions run on a processing device), or a combination thereof. In one implementation, some or all the operations of methods 700, 800, and 900 may be performed by one or more components of system 100 of **FIG. 1****.**

Referring now to **FIG. 7****,** at block 710, the processing logic identifies one or more text strings including a textual form of one or more verbal statements provided by one or more participants of a conference call. The processing logic can identify the one or more text strings by generating, during the conference call, an audio file including the one or more verbal phrases provided by the one or more participants of the conference call. The processing logic can convert content of the audio file into a set of text strings including the one or more text strings. In some embodiments, the processing logic can convert content of the audio file into the set of text strings by generating, during or after completion of the conference call, a transcript of the conference call including the set of text strings. The processing logic can identify the one or more text strings based on the generated transcript. For example, the processing logic can identify a particular text string including a textual form of an additional verbal phrase provided by a participant of the conference call where the additional verbal phrase corresponds to an answer to a potential question. The processing logic can determine that a distance between a text string of the transcript including the verbal phrase and the particular text string including the additional verbal phrase satisfies a distance criterion (e.g., meets or exceeds a distance threshold).

At block 720, the processing logic provides the one or more text strings as input to a trained machine learning model. At block 730, the processing logic obtains one or more outputs from the trained machine learning model. At block 740, the processing logic extracts, from the one or more outputs, a level of confidence that a first verbal statement of the one or more verbal statements includes a polling question. At block 750, the processing logic determines whether a confidence criterion is satisfied. In response to the processing logic determining the confidence criterion is satisfied, method 700 continues to block 760. In response to the processing logic determining the confidence criterion is not satisfied, method 700 terminations. At block 760, the processing logic designates the first verbal statement as a polling question.

In some embodiments, in response to designating the verbal phrase as the polling question presented during the conference call, the processing logic can generate a file including a result of the polling question. A first portion of the file includes the one or more text strings including the verbal phrase and a second portion of the file includes data corresponding to one or more additional verbal phrases associated with answers to the polling question.

In some embodiments, in response to designating the verbal phrase as a polling question presented during the conference call, the processing logic can identify a particular participant that provided the verbal phrase of the one or more verbal phrases. The processing logic can cause the verbal phrase to be displayed in a first UI of a first client device associated with the particular participant. The first UI can include one or more first UI elements configured to enable the particular participant to pose the verbal phrase as the polling question to the one or more additional participants of the conference call. In response to receiving an indication that the particular participant has interacted with the one or more first UI elements of the first UI, the processing logic can cause a notification to be displayed via a second UI of a second client device associated with an additional participant of the one or more additional participants of the conference call. The notification can include the polling question and one or more second UI elements configured to enable the additional participants to respond to the polling question.

As discussed above, **FIG. 8** depicts a flow diagram of a method 800 for training a machine learning model to identify a verbal phrase provided during a conference call that corresponds with a polling question, in accordance with implementations of the present disclosure. At block 810, processing logic initializes a training set T to {}. At block 820, the processing logic identifies data corresponding to a phrase provided by a user of a platform. At block 830, the processing logic generates an input/output mapping, the input based on the identified data and the output identifying whether the phrase corresponds to a question previously used for polling additional users of the platform. At block 840, the processing logic adds the input/output mapping to training set T. At block 850, the processing logic determines whether set T is sufficient for training. In response to processing logic determining set T is sufficient for training, method 800 continues to block 860. In response to the processing logic determining set T is not sufficient for training, method 800 returns to block 820. At block 860, the processing logic provides the training set T to train the machine learning model.

As discussed above, **FIG. 9** depicts a flow diagram of a method 900 for populating answers to polling questions based on initial responses, in accordance with implementations of the present disclosure. At block 910, the processing device provides a graphical user interface (GUI) to a set of participants of a conference call. The GUI includes a first portion that presents a polling question to be answered by the set of participants. At block 920, the processing device detects that a first participant has provided a verbal answer to the polling question. At block 930, the processing device determines whether an answer criterion is satisfied. In response to determining the answer criterion is not satisfied, method 900 ends. In response to determining the answer criterion is satisfied, method 900 continues to block 940. At block 940, the processing device modifies the GUI provided to a second participant to present a textual form of the verbal answer provided by the first participant and a GUI element that allows the second user to provide a non-verbal answer to the polling question via selection of the GUI element. At block 950, the processing device detects that the second participant has provided a verbal answer and/or a non-verbal answer to the polling question. At block 960, the processing device modifies the GUI provided to a third participant to present a textual form of the verbal answer provided by the first participant and the verbal answer and/or the non-verbal answer provided by the second participant.

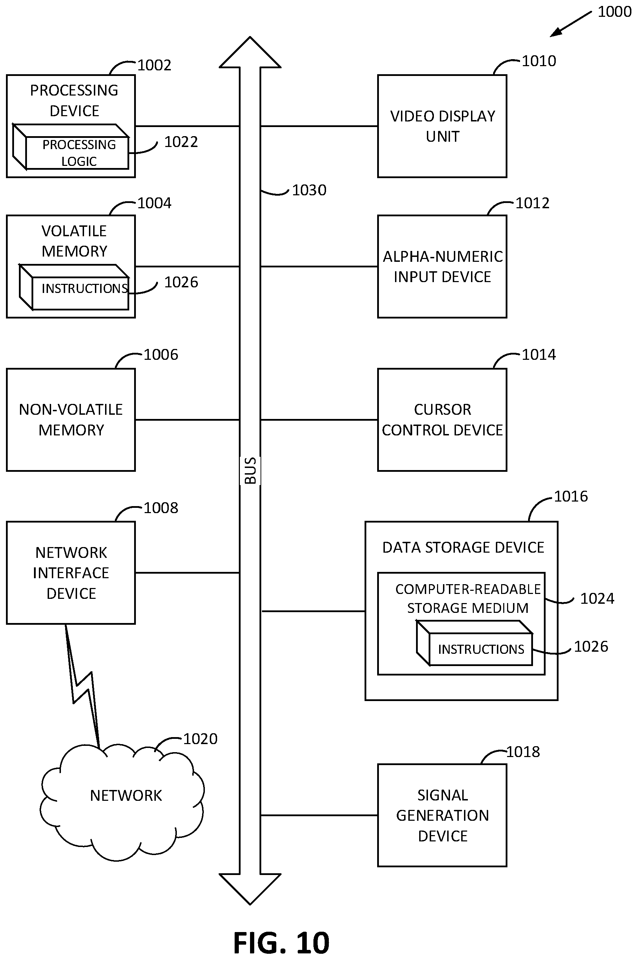

**FIG. 10** is a block diagram illustrating an exemplary computer system, in accordance with implementations of the present disclosure. The computer system 1000 can be the conference platform 120 or client devices 102A-N in **FIG. 1****.** The machine can operate in the capacity of a server or an endpoint machine in endpoint-server network environment, or as a peer machine in a peer-to-peer (or distributed) network environment. The machine can be a television, a personal computer (PC), a tablet PC, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 1000 includes a processing device (processor) 1002, a main memory 1004 (e.g., read-only memory (ROM), flash memory, dynamic random access memory (DRAM) such as synchronous DRAM (SDRAM), double data rate (DDR SDRAM), or DRAM (RDRAM), etc.), a static memory 1006 (e.g., flash memory, static random access memory (SRAM), etc.), and a data storage device 1018, which communicate with each other via a bus 1040.

Processor (processing device) 1002 represents one or more general-purpose processing devices such as a microprocessor, central processing unit, or the like. More particularly, the processor 1002 can be a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor 1002 can also be one or more special-purpose processing devices such as an application specific integrated circuit (ASIC), a field programmable gate array (FPGA), a digital signal processor (DSP), network processor, or the like. The processor 1002 is configured to execute instructions 1005 (e.g., for predicting channel lineup viewership) for performing the operations discussed herein.

The computer system 1000 can further include a network interface device 1008. The computer system 1000 also can include a video display unit 1010 (e.g., a liquid crystal display (LCD) or a cathode ray tube (CRT)), an input device 1012 (e.g., a keyboard, and alphanumeric keyboard, a motion sensing input device, touch screen), a cursor control device 1014 (e.g., a mouse), and a signal generation device 1020 (e.g., a speaker).

The data storage device 1018 can include a non-transitory machine-readable storage medium 1024 (also computer-readable storage medium) on which is stored one or more sets of instructions 1005 (e.g., for predicting channel lineup viewership) embodying any one or more of the methodologies or functions described herein. The instructions can also reside, completely or at least partially, within the main memory 1004 and/or within the processor 1002 during execution thereof by the computer system 1000, the main memory 1004 and the processor 1002 also constituting machine-readable storage media. The instructions can further be transmitted or received over a network 1030 via the network interface device 1008.

In one implementation, the instructions 1005 include instructions for designating a verbal statement as a polling question. In additional or alternative implementations, the instructions 1005 include instructions for populating answers to polling questions based on initial responses. While the computer-readable storage medium 1024 (machine-readable storage medium) is shown in an exemplary implementation to be a single medium, the terms "computer-readable storage medium" and "machine-readable storage medium" should be taken to include a single medium or multiple media (e.g., a centralized or distributed database, and/or associated caches and servers) that store the one or more sets of instructions. The terms "computer-readable storage medium" and "machine-readable storage medium" shall also be taken to include any medium that is capable of storing, encoding or carrying a set of instructions for execution by the machine and that cause the machine to perform any one or more of the methodologies of the present disclosure. The terms "computer-readable storage medium" and "machine-readable storage medium" shall accordingly be taken to include, but not be limited to, solid-state memories, optical media, and magnetic media.

Reference throughout this specification to "one implementation," or "an implementation," means that a particular feature, structure, or characteristic described in connection with the implementation is included in at least one implementation. Thus, the appearances of the phrase "in one implementation," or "in an implementation," in various places throughout this specification can, but are not necessarily, referring to the same implementation, depending on the circumstances. Furthermore, the particular features, structures, or characteristics can be combined in any suitable manner in one or more implementations.

To the extent that the terms "includes," "including," "has," "contains," variants thereof, and other similar words are used in the description these terms are intended to be inclusive in a manner similar to the term "comprising" as an open transition word without precluding any additional or other elements.

As used in this application, the terms "component," "module," "system," or the like are generally intended to refer to a computer-related entity, either hardware (e.g., a circuit), software, a combination of hardware and software, or an entity related to an operational machine with one or more specific functionalities. For example, a component can be, but is not limited to being, a process running on a processor (e.g., digital signal processor), a processor, an object, an executable, a thread of execution, a program, and/or a computer. By way of illustration, both an application running on a controller and the controller can be a component. One or more components can reside within a process and/or thread of execution and a component can be localized on one computer and/or distributed between two or more computers. Further, a "device" can come in the form of specially designed hardware; generalized hardware made specialized by the execution of software thereon that enables hardware to perform specific functions (e.g., generating interest points and/or descriptors); software on a computer readable medium; or a combination thereof.

The aforementioned systems, circuits, modules, and so on have been described with respect to interact between several components and/or blocks. It can be appreciated that such systems, circuits, components, blocks, and so forth can include those components or specified sub-components, some of the specified components or sub-components, and/or additional components, and according to various permutations and combinations of the foregoing. Sub-components can also be implemented as components communicatively coupled to other components rather than included within parent components (hierarchical). Additionally, it should be noted that one or more components can be combined into a single component providing aggregate functionality or divided into several separate sub-components, and any one or more middle layers, such as a management layer, can be provided to communicatively couple to such sub-components in order to provide integrated functionality. Any components described herein can also interact with one or more other components not specifically described herein but known by those of skill in the art.

Moreover, the words "example" or "exemplary" are used herein to mean serving as an example, instance, or illustration. Any aspect or design described herein as "exemplary" is not necessarily to be construed as preferred or advantageous over other aspects or designs. Rather, use of the words "example" or "exemplary" is intended to present concepts in a concrete fashion. As used in this application, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

Finally, implementations described herein include collection of data describing a user and/or activities of a user. In one implementation, such data is only collected upon the user providing consent to the collection of this data. In some implementations, a user is prompted to explicitly allow data collection. Further, the user can opt-in or opt-out of participating in such data collection activities. In one implementation, the collect data is anonymized prior to performing any analysis to obtain any statistical patterns so that the identity of the user cannot be determined from the collected data.

## Claims

1. A method (700) comprising:
identifying (710) one or more text strings comprising a textual form of one or more verbal phrases provided by one or more participants of a conference call;
providing (720) the one or more text strings as input to a trained machine learning model (160);
obtaining (730) one or more outputs from the trained machine learning model;
extracting (740), from the one or more outputs, a level of confidence that a verbal phrase of the one or more verbal phrases provided by the one or more participants comprises a question associated with polling during the conference call;
responsive to determining (750) that the level of confidence satisfies a confidence criterion, designating (760) the verbal phrase as a polling question presented during the conference call;
identifying, among the one or more participants of the conference call, a particular participant that provided the verbal phrase of the one or more verbal phrases;
causing the verbal phrase to be displayed in a user interface UI of a particular client device (102A-N) associated with the particular participant of the conference call; and
responsive to receiving an indication that the particular participant has interacted with the one or more UI elements of the UI of the particular client device, causing a notification to be displayed via a UI of an additional client device (102A-N) associated with an additional participant of the one or more additional participants of the conference call.

2. The method (700) of claim 1, wherein identifying (710) the one or more text strings comprises:
generating, during the conference call, an audio file comprising the one or more verbal phrases provided by the one or more participants of the conference call; and
converting content of the audio file into a set of text strings comprising the one or more text strings.

3. The method (700) of claim 2, wherein converting the content of the audio file into the set of text strings comprises:
generating a transcript of the conference call comprising the set of text strings, wherein the one or more text strings are identified based on the generated transcript.

4. The method (700) of claim 3, wherein identifying the one or more text strings further comprises:
identifying, in the transcript, a particular text string comprising a textual form of an additional verbal phrase provided by a participant of the conference call, the additional verbal phrase corresponding to an answer to a potential question; and
determining that a distance between a text string of the transcript comprising the verbal phrase and the particular text string comprising the additional verbal phrase satisfies a distance criterion.

5. The method of claim 3, further comprising:
responsive to designating the verbal phrase as the polling question presented during the conference call, generating a file comprising a result of the polling question, wherein a portion of the file comprises the one or more text strings comprising the verbal phrase, and wherein an additional portion of the file comprises data corresponding to one or more additional verbal phrases associated with answers to the polling question.

6. The method of any preceding claim, wherein the UI of the particular client device comprises one or more UI elements configured to enable the particular participant to pose the verbal phrase as the polling question to one or more additional participants of the conference call.

7. The method of claim 6, wherein the notification comprises the polling question and one or more additional UI elements configured to enable the additional participant to respond to the polling question.

8. A system (1000) comprising:
a memory device (1004); and
a processing device (1002) coupled to the memory device, the processing device to perform operations comprising:
identifying one or more text strings including a provided phrase from a database comprising a plurality of verbal phrases provided by users of a platform (120);
generating training data for a machine learning model (160), wherein generating the training data comprises:
generating a training input comprising data corresponding to the phrase provided by the users of the platform; and
generating a target output for the training input, wherein the target output comprises an indication of whether the phrase corresponds to a question previously used for polling one or more additional users of the platform; and
providing the training data to train the machine learning model on i) a set of training inputs comprising the training input and ii) a set of target outputs comprising the target output; and
obtaining (730) one or more outputs from the trained machine learning model;
extracting (740), from the one or more outputs, a level of confidence that a verbal phrase of the one or more verbal phrases provided by the one or more participants comprises a question associated with polling during the conference call;
responsive to determining (750) that the level of confidence satisfies a confidence criterion, designating (760) the verbal phrase as a polling question presented during the conference call;
identifying a particular participant of a conference call that provided the verbal phrase of the plurality of verbal phrases during the conference call;
causing the verbal phrase to be displayed in a user interface UI of a particular client device (102A-N) associated with the particular participant of a conference call; and
responsive to receiving an indication that the particular participant has interacted with the one or more UI elements of the UI of the particular client device, causing a notification to be displayed via a UI of an additional client device (102A-N) associated with an additional participant of the one or more additional participants of the conference call.

9. The system of claim 8, wherein:
to generate the training input comprising data corresponding to the phrase provided by the user of the platform (120), the processing device (102) is to perform operations comprising identifying one or more text strings including the provided phrase from a database comprising a plurality verbal phrases provided by users of the platform; and
to generate the target output for the training input, the processing device is to perform operations comprising responsive to determining that the phrase provided by the user of the platform corresponds to a question, determining whether the question was used for polling the one or more additional users of the platform.

10. The system (1000) of claim 9 wherein to determine whether the question was used for polling the one or more additional users of the platform (120), the processing device (102) is to perform operations comprising:
determining whether the phrase corresponding to the question was previously provided to solicit responses to the question from the one or more additional users.

11. The system (1000) of any one of claim 8 to 10, wherein the machine learning model (160) is configured to determine whether one or more verbal phrases provided by one or more participants of a conference call comprises a question associated with polling during the conference call.

12. A non-transitory computer readable storage medium (1004) comprising instructions (1026) for a server that, when executed by a processing device (102), cause the processing device to perform operations comprising a method as defined in any one of claims 1 to 7.

## Patentansprüche

1. Verfahren (700), umfassend:
Identifizieren (710) einer oder mehrerer Textzeichenfolgen, die eine Textform eines oder mehrerer verbaler Ausdrücke umfassen, die von einem oder mehreren Teilnehmern einer Telefonkonferenz bereitgestellt werden;
Bereitstellen (720) der einen oder mehreren Textzeichenfolgen als Eingabe für ein trainiertes maschinelles Lernmodell (160);
Erlangen (730) einer oder mehreren Ausgaben des trainierten maschinellen Lernmodells;
Extrahieren (740) eines Vertrauensniveaus aus der einen oder den mehreren Ausgaben, dass ein verbaler Ausdruck des einen oder der mehreren verbalen Ausdrücke, die von dem einen oder den mehreren Teilnehmern bereitgestellt werden, eine Frage umfasst, die einer Abstimmung während der Telefonkonferenz zugeordnet ist;
als Reaktion auf das Bestimmen (750), dass das Vertrauensniveau ein Vertrauenskriterium erfüllt, Bestimmen (760) des verbalen Ausdrucks als eine während der Telefonkonferenz gestellte Abstimmungsfrage;
Identifizieren eines bestimmten Teilnehmers unter dem einen oder den mehreren Teilnehmern der Telefonkonferenz, der den verbalen Ausdruck des einen oder der mehreren verbalen Ausdrücke bereitgestellt hat;
Veranlassen, dass der verbale Ausdruck in einer Benutzerschnittstelle (UI) einer bestimmten Client-Vorrichtung (102A-N) angezeigt wird, die dem bestimmten Teilnehmer der Telefonkonferenz zugeordnet ist; und
als Reaktion auf das Empfangen einer Angabe, dass der bestimmte Teilnehmer mit dem einen oder den mehreren UI-Elementen der UI der bestimmten Client-Vorrichtung interagiert hat, Veranlassen, dass eine Benachrichtigung über eine UI einer zusätzlichen Client-Vorrichtung (102A-N) angezeigt wird, die einem zusätzlichen Teilnehmer des einen oder der mehreren zusätzlichen Teilnehmer der Telefonkonferenz zugeordnet ist.

2. Verfahren (700) nach Anspruch 1, wobei das Identifizieren (710) der einen oder mehreren Textzeichenfolgen umfasst:
Erzeugen einer Audiodatei während der Telefonkonferenz, die den einen oder die mehreren verbalen Ausdrücke umfasst, die von dem einen oder den mehreren Teilnehmern der Telefonkonferenz bereitgestellt werden; und
Umwandeln des Inhalts der Audiodatei in einen Satz von Textzeichenfolgen, der die eine oder mehreren Textzeichenfolgen umfasst.

3. Verfahren (700) nach Anspruch 2, wobei das Umwandeln des Inhalts der Audiodatei in den Satz von Textzeichenfolgen Folgendes umfasst:
Erzeugen eines Transkripts der Telefonkonferenz, das den Satz von Textzeichenfolgen umfasst, wobei die eine oder mehreren Textzeichenfolgen auf Grundlage des erzeugten Transkripts identifiziert werden.

4. Verfahren (700) nach Anspruch 3, wobei das Identifizieren der einen oder mehreren Textzeichenfolgen ferner Folgendes umfasst:
Identifizieren einer bestimmten Textzeichenfolge in dem Transkript, die eine Textform eines zusätzlichen verbalen Ausdrucks umfasst, der von einem Teilnehmer der Telefonkonferenz bereitgestellt wird, wobei der zusätzliche verbale Ausdruck einer Antwort auf eine mögliche Frage entspricht; und
Bestimmen, dass ein Abstand zwischen einer Textzeichenfolge des Transkripts, die den verbalen Ausdruck umfasst, und der bestimmten Textzeichenfolge, die den zusätzlichen verbalen Ausdruck umfasst, ein Abstandskriterium erfüllt.

5. Verfahren nach Anspruch 3, ferner umfassend:
als Reaktion auf das Festlegen des verbalen Ausdrucks als Abstimmungsfrage, die während der Telefonkonferenz gestellt wird, Erzeugen einer Datei, die ein Ergebnis der Abstimmungsfrage umfasst, wobei ein Teil der Datei eine oder mehrere Textzeichenfolgen umfasst, die den verbalen Ausdruck umfassen, und wobei ein weiterer Teil der Datei Daten umfasst, die einer oder mehreren zusätzlichen verbalen Ausdrücken entsprechen, die Antworten auf die Abstimmungsfrage zugeordnet sind.

6. Verfahren nach einem der vorhergehenden Ansprüche, wobei die UI der bestimmten Client-Vorrichtung ein oder mehrere UI-Elemente umfasst, die dazu konfiguriert sind, dem bestimmten Teilnehmer zu ermöglichen, den verbalen Ausdruck als Abstimmungsfrage einem oder mehreren zusätzlichen Teilnehmern der Telefonkonferenz zu stellen.

7. Verfahren nach Anspruch 6, wobei die Benachrichtigung die Abstimmungsfrage und ein oder mehrere zusätzliche UI-Elemente umfasst, die dazu konfiguriert sind, dem zusätzlichen Teilnehmer zu ermöglichen, auf die Abstimmungsfrage zu antworten.

8. System (1000), umfassend:
eine Speichervorrichtung (1004); und
eine mit der Speichervorrichtung gekoppelte Verarbeitungsvorrichtung (1002), wobei die Verarbeitungsvorrichtung zum Durchführen von Operationen Folgendes umfasst:
Identifizieren einer oder mehrerer Textzeichenfolgen, die einen bereitgestellten Ausdruck aus einer Datenbank beinhalten, die eine Vielzahl von verbalen Ausdrücken umfasst, die von Benutzern einer Plattform (120) bereitgestellt wurden;
Erzeugen von Trainingsdaten für ein maschinelles Lernmodell (160), wobei das Erzeugen der Trainingsdaten Folgendes umfasst:
Erzeugen einer Trainingseingabe, die Daten umfasst, die dem von den Benutzern der Plattform bereitgestellten Ausdruck entsprechen; und
Erzeugen einer Zielausgabe für die Trainingseingabe, wobei die Zielausgabe eine Angabe darüber umfasst, ob der Ausdruck einer Frage entspricht, die zuvor zum Abfragen eines oder mehrerer zusätzlicher Benutzer der Plattform verwendet wurde; und
Bereitstellen der Trainingsdaten zum Trainieren des maschinellen Lernmodells auf i) einem Satz von Trainingseingaben, der die Trainingseingabe umfasst, und ii) einem Satz von Zielausgaben, der die Zielausgabe umfasst; und
Erlangen (730) einer oder mehreren Ausgaben des trainierten maschinellen Lernmodells;
Extrahieren (740) eines Vertrauensniveaus aus der einen oder den mehreren Ausgaben, dass ein verbaler Ausdruck des einen oder der mehreren verbalen Ausdrücke, die von dem einen oder den mehreren Teilnehmern bereitgestellt werden, eine Frage umfasst, die einer Abstimmung während der Telefonkonferenz zugeordnet ist;
als Reaktion auf das Bestimmen (750), dass das Vertrauensniveau ein Vertrauenskriterium erfüllt, Bestimmen (760) des verbalen Ausdrucks als eine während der Telefonkonferenz gestellte Abstimmungsfrage;
Identifizieren eines bestimmten Teilnehmers einer Telefonkonferenz, der den verbalen Ausdruck aus der Vielzahl von verbalen Ausdrücken während der Telefonkonferenz bereitgestellt hat;
Veranlassen, dass der verbale Ausdruck in einer Benutzerschnittstelle (UI) einer bestimmten Client-Vorrichtung (102A-N) angezeigt wird, die dem bestimmten Teilnehmer einer Telefonkonferenz zugeordnet ist; und
als Reaktion auf das Empfangen einer Angabe, dass der bestimmte Teilnehmer mit dem einen oder den mehreren UI-Elementen der UI der bestimmten Client-Vorrichtung interagiert hat, Veranlassen, dass eine Benachrichtigung über eine UI einer zusätzlichen Client-Vorrichtung (102A-N) angezeigt wird, die einem zusätzlichen Teilnehmer des einen oder der mehreren zusätzlichen Teilnehmer der Telefonkonferenz zugeordnet ist.

9. System nach Anspruch 8, wobei:
die Verarbeitungsvorrichtung (102) zum Erzeugen der Trainingseingabe, die Daten umfasst, die dem von dem Benutzer der Plattform (120) bereitgestellten Ausdruck entsprechen, Operationen durchführen soll, die Identifizieren einer oder mehrerer Textzeichenfolgen, die den bereitgestellten Ausdruck aus einer Datenbank beinhalten, die eine Vielzahl von verbalen Ausdrücken umfasst, die von Benutzern der Plattform bereitgestellt werden, umfassen; und
die Verarbeitungsvorrichtung zum Erzeugen der Zielausgabe für die Trainingseingabe Operationen durchführen soll, die als Reaktion auf das Bestimmen, dass der von dem Benutzer der Plattform bereitgestellte Ausdruck einer Frage entspricht, Bestimmen, ob die Frage zum Abfragen des einen oder der mehreren zusätzlichen Benutzer der Plattform verwendet wurde, umfassen.

10. System (1000) nach Anspruch 9, wobei die Verarbeitungsvorrichtung (102) zum Bestimmen, ob die Frage zum Abfragen des einen oder der mehreren zusätzlichen Benutzer der Plattform (120) verwendet wurde, Operationen durchführen soll, die Folgendes umfassen:
Bestimmen, ob der der Frage entsprechende Ausdruck zuvor bereitgestellt wurde, um Antworten auf die Frage von dem einen oder den mehreren zusätzlichen Benutzern einzuholen.

11. System (1000) nach einem der Ansprüche 8 bis 10, wobei das maschinelle Lernmodell (160) dazu konfiguriert ist, zu bestimmen, ob ein oder mehrere verbale Ausdrücke, die von einem oder mehreren Teilnehmern einer Telefonkonferenz bereitgestellt werden, eine Frage umfassen, die einer Abstimmung während der Telefonkonferenz zugeordnet ist.

12. Nicht transitorisches computerlesbares Speichermedium (1004), umfassend Anweisungen (1026) für einen Server, die bei Ausführung durch eine Verarbeitungsvorrichtung (102) die Verarbeitungsvorrichtung veranlassen, Operationen durchzuführen, die ein Verfahren nach einem der Ansprüche 1 bis 7 umfassen.

## Revendications

1. Procédé (700) comprenant :
l'identification (710) d'une ou de plusieurs chaînes de texte comprenant une forme textuelle d'une ou de plusieurs phrases verbales fournies par un ou plusieurs participants à un appel de conférence ;
la fourniture (720) des une ou plusieurs chaînes de texte en tant qu'entrée à un modèle d'apprentissage automatique entraîné (160) ;
l'obtention (730) d'une ou de plusieurs sorties à partir du modèle d'apprentissage automatique entraîné ;
l'extraction (740), à partir des une ou plusieurs sorties, d'un niveau de confiance qu'une phrase verbale des une ou plusieurs phrases verbales fournies par les un ou plusieurs participants comprend une question associée à la scrutation pendant l'appel de conférence ;
en réponse à la détermination (750) que le niveau de confiance satisfait un critère de confiance, la désignation (760) de la phrase verbale comme une question de scrutation présentée lors de l'appel de conférence ;
l'identification, parmi les un ou plusieurs participants à l'appel de conférence, d'un participant particulier qui a fourni la phrase verbale des une ou plusieurs phrases verbales ;
le fait d'amener l'affichage de la phrase verbale dans une interface utilisateur UI d'un dispositif client (102A-N) particulier associé au participant particulier de l'appel de conférence ; et
en réponse à la réception d'une indication selon laquelle le participant particulier a interagi avec les un ou plusieurs éléments d'interface utilisateur de l'interface utilisateur du dispositif client particulier, le fait d'amener l'affichage d'une notification par le biais d'une interface utilisateur d'un dispositif client (102A-N) supplémentaire associé à un participant supplémentaire parmi les un ou plusieurs participants supplémentaires de l'appel de conférence.

2. Procédé (700) selon la revendication 1, dans lequel l'identification (710) des une ou plusieurs chaînes de texte comprend :
la génération, pendant l'appel de conférence, d'un fichier audio comprenant les une ou plusieurs phrases verbales fournies par les un ou plusieurs participants à l'appel de conférence ; et
la conversion du contenu du fichier audio en un ensemble de chaînes de texte comprenant les une ou plusieurs chaînes de texte.

3. Procédé (700) selon la revendication 2, dans lequel la conversion du contenu du fichier audio en l'ensemble de chaînes de texte comprend :
la génération d'une transcription de l'appel de conférence comprenant l'ensemble de chaînes de texte, dans lequel les une ou plusieurs chaînes de texte sont identifiées sur la base de la transcription générée.

4. Procédé (700) selon la revendication 3, dans lequel l'identification des une ou plusieurs chaînes de texte comprend également :
l'identification, dans la transcription, d'une chaîne de texte particulière comprenant une forme textuelle d'une phrase verbale supplémentaire fournie par un participant à l'appel de conférence, la phrase verbale supplémentaire correspondant à une réponse à une question potentielle ; et
la détermination qu'une distance entre une chaîne de texte de la transcription comprenant la phrase verbale et la chaîne de texte particulière comprenant la phrase verbale supplémentaire satisfait un critère de distance.

5. Procédé selon la revendication 3, comprenant également :
en réponse à la désignation de la phrase verbale comme question de scrutation présentée pendant l'appel de conférence, la génération d'un fichier comprenant un résultat de la question de scrutation, dans lequel une partie du fichier comprend les une ou plusieurs chaînes de texte comprenant la phrase verbale, et dans lequel une partie supplémentaire du fichier comprend des données correspondant à une ou plusieurs phrases verbales supplémentaires associées à des réponses à la question de scrutation.

6. Procédé selon une quelconque revendication précédente, dans lequel l'interface utilisateur du dispositif client particulier comprend un ou plusieurs éléments d'interface utilisateur configurés pour permettre au participant particulier de poser la phrase verbale comme question de scrutation à un ou plusieurs participants supplémentaires de l'appel de conférence.

7. Procédé selon la revendication 6, dans lequel la notification comprend la question de scrutation et un ou plusieurs éléments d'interface utilisateur supplémentaires configurés pour permettre au participant supplémentaire de répondre à la question de scrutation.

8. Système (1000) comprenant :
un dispositif de mémoire (1004) ; et
un dispositif de traitement (1002) couplé au dispositif de mémoire, le dispositif de traitement permettant de réaliser des opérations comprenant :
l'identification d'une ou de plusieurs chaînes de texte comportant une phrase fournie à partir d'une base de données comprenant une pluralité de phrases verbales fournies par les utilisateurs d'une plateforme (120) ;
la génération de données d'entraînement pour un modèle d'apprentissage automatique (160), dans lequel la génération des données d'entraînement comprend :
la génération d'une entrée d'entraînement comprenant des données correspondant à la phrase fournie par les utilisateurs de la plateforme ; et
la génération d'une sortie cible pour l'entrée d'entraînement, dans lequel la sortie cible comprend une indication indiquant si la phrase correspond à une question précédemment utilisée pour interroger un ou plusieurs utilisateurs supplémentaires de la plateforme ; et
la fourniture des données d'entraînement pour entraîner le modèle d'apprentissage automatique sur i) un ensemble d'entrées d'entraînement comprenant l'entrée d'entraînement et ii) un ensemble de sorties cibles comprenant la sortie cible ; et
l'obtention (730) d'une ou de plusieurs sorties à partir du modèle d'apprentissage automatique entraîné ;
l'extraction (740), à partir des une ou plusieurs sorties, d'un niveau de confiance qu'une phrase verbale des une ou plusieurs phrases verbales fournies par les un ou plusieurs participants comprend une question associée à la scrutation pendant l'appel de conférence ;
en réponse à la détermination (750) que le niveau de confiance satisfait un critère de confiance, la désignation (760) de la phrase verbale comme une question de scrutation présentée lors de l'appel de conférence ;
l'identification d'un participant particulier d'un appel de conférence qui a fourni la phrase verbale de la pluralité de phrases verbales au cours de l'appel de conférence ;
le fait d'amener l'affichage de la phrase verbale dans une interface utilisateur UI d'un dispositif client (102A-N) particulier associé au participant particulier d'un appel de conférence ; et
en réponse à la réception d'une indication selon laquelle le participant particulier a interagi avec les un ou plusieurs éléments d'interface utilisateur de l'interface utilisateur du dispositif client particulier, le fait d'amener l'affichage d'une notification par le biais d'une interface utilisateur d'un dispositif client (102A-N) supplémentaire associé à un participant supplémentaire parmi les un ou plusieurs participants supplémentaires de l'appel de conférence.

9. Système selon la revendication 8, dans lequel :
pour générer l'entrée d'entraînement comprenant des données correspondant à la phrase fournie par l'utilisateur de la plateforme (120), le dispositif de traitement (102) doit réaliser des opérations comprenant l'identification d'une ou de plusieurs chaînes de texte comportant la phrase fournie à partir d'une base de données comprenant une pluralité de phrases verbales fournies par les utilisateurs de la plateforme ; et
pour générer la sortie cible pour l'entrée d'entraînement, le dispositif de traitement doit réaliser des opérations comprenant, en réponse à la détermination que la phrase fournie par l'utilisateur de la plateforme correspond à une question, le fait de déterminer si la question a été utilisée pour interroger les un ou plusieurs utilisateurs supplémentaires de la plateforme.

10. Système (1000) selon la revendication 9, dans lequel, pour déterminer si la question a été utilisée pour interroger les un ou plusieurs utilisateurs supplémentaires de la plateforme (120), le dispositif de traitement (102) doit réaliser des opérations comprenant :
le fait de déterminer si la phrase correspondant à la question a été précédemment fournie pour solliciter des réponses à la question auprès des un ou plusieurs utilisateurs supplémentaires.

11. Système (1000) selon l'une quelconque des revendications 8 à 10, dans lequel le modèle d'apprentissage automatique (160) est configuré pour déterminer si une ou plusieurs phrases verbales fournies par un ou plusieurs participants d'un appel de conférence comprennent une question associée à une scrutation pendant l'appel de conférence.

12. Support de stockage non transitoire lisible par ordinateur (1004) comprenant des instructions (1026) pour un serveur qui, lorsqu'elles sont exécutées par un dispositif de traitement (102), amènent le dispositif de traitement à réaliser les opérations comprenant le procédé selon l'une quelconque des revendications 1 à 7.
